(19) Europäisches Patentamt
European Patent Office
Office européen des brevets

(11) EP 3 647 645 A1

(12) **EUROPEAN PATENT APPLICATION**

(43) Date of publication:
**06.05.2020 Bulletin 2020/19**

(21) Application number: **18203687.1**

(22) Date of filing: **31.10.2018**

(51) Int Cl.:
***F16L 9/12*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1220 Vienna (AT)**

(72) Inventors:
- **LIU, Yi**
**4021 Linz (AT)**
- **DOU, Qizheng**
**4021 Linz (AT)**
- **SUMERIN, Victor**
**06101 Porvoo (FI)**
- **VAHTERI, Markku**
**06101 Porvoo (FI)**
- **HJERTBERG, Thomas**
**444 86 Stenungsund (SE)**
- **GALGALI, Girish Suresh**
**4021 Linz (AT)**
- **ALBUNIA, Alexandra Romina**
**4021 Linz (AT)**

(74) Representative: **Maiwald Patent- und Rechtsanwaltsgesellschaft mbH**
**Elisenhof**
**Elisenstraße 3**
**80335 München (DE)**

# (54) POLYETHYLENE COMPOSITION FOR HIGH PRESSURE RESISTANT PIPES

(57) The present invention relates to a polyethylene composition comprising
a base resin having a density of from 950.0 kg/m$^3$ to 962.0 kg/m$^3$, determined according to ISO 1183, wherein the polyethylene composition has a melt flow rate $MFR_{21}$ (190°C, 21.16 kg), of from 1.0 to 9.0 g/10 min, determined according to ISO 1133 and a viscosity at a constant shear stress of 747 Pa $eta_{747}$ of from 3500 kPa·s to 20000 kPa·s, a polyethylene composition obtainable by a multi-stage process, a process for producing said polyethylene composition, an article, such as a pipe or pipe fitting, comprising said polyethylene composition and the use of said polyethylene composition for the production of an article, such as a pipe or pipe fitting.

EP 3 647 645 A1

## Description

The present invention relates to a polyethylene composition suitable for high pressure resistant pipes, a process for producing such a polyethylene composition, and an article, such as a pipe or pipe fitting, comprising said polyethylene composition and the use of said polyethylene composition for the production of an articles such as a pipe or pipe fitting.

## Background of the invention

Numerous polyethylene compositions for the production of pipes are known. Pipe materials are classified such as PE80 or PE100. The service temperature for PE100 is 20°C. The ISO 9080 classification guarantees that a PE100 material will have a lifetime of at least 50 years at 20°C using internal stress of 10 MPa.

EP 1 987 097 in the name of Chevron Phillips Chemical Company discloses a polyethylene suitable for pipes having a pellets' density of equal to or greater than 947 $kg/m^3$ and a $MFR_{21}$, (ASTM D1238, 21.6 kg load) of 1 to 30 g/10min. The exemplified resins with dual-site supported metallocene catalysts showed weight average molecular weights of 278 to 346 kg/mol at Mw/Mn of from 30.5 to 35.1 and pellets' density from 951 to 954 $kg/m^3$.

EP 1 781 712 in the name of UNIVATION TECH LLC [US] discloses various compositions, including but not limited to a high strength bimodal polyethylene composition having a density of 0.940 g/cc or more, the composition comprising a high molecular weight polyethylene component having a higher weight average molecular weight (HwHMW) and a low molecular weight polyethylene component having a lower weight average molecular weight (HwLMW), wherein the ratio of the higher weight average molecular weight to the lower weight average molecular weight (MwHMW:MwLMW) is 30 or more; and the composition qualifies as a PE 100 material such that in accordance with ISO 1167 a pipe formed from the composition that is subjected to internal pipe resistance has an extrapolated stress of 10 MPa or more when the internal pipe resistance curve is extrapolated to 50 or 100 years in accordance with ISO 9080:2003. The exemplified resins were produced with dual-site supported metallocene catalysts.

EP 1 922 342 of the Ineos group discloses compositions having a natural density of 935 up to 956 $kg/m^3$ at a melt flow rate (5 kg load) of 0.15 to 0.5 g/10 min, the comonomer being 1-hexene and a dynamic viscosity at 100 rad/s, 190°C of no more than 2500 Pa·s.

EP 1 146 079 in the name of Borealis Technology Oy discloses compositions having a powder density of at least 953 $kg/m^3$ and a final density of the composition in the range of 955 to 965 $kg/m^3$, a $MFR_5$ of 0.15 to 0.40 g/10 min. Pipes made from the compositions meet a design stress of at least 9.0 MPa (PE112). The compositions are composed of two components, whereby the low molecular weight component is an ethylene homopolymer having a $MFR_2$ of 350 to 1500 g/10 min and is present in an amount of 42 to 55 wt.-%.

According to ISO 9080, polyethylene pipes are classified by their minimum required strength, i.e. their capability to withstand different hoop stresses during 50 years at 20°C without fracturing. Thereby, pipes withstanding a hoop stress of 8.0 MPa ($MRS_{8.0}$) are classified as PE80 pipes, and pipes withstanding a hoop stress of 10.0 MPa ($MRS_{10.0}$) are classified as PE100 pipes. The next evolutionary step in polyethylene pipe development will be PE125 pipes withstanding a hoop stress of 12.5 MPa ($MRS_{12.5}$). To meet the PE80 requirements with multimodal resins manufactured by conventional Ziegler-Natta catalysts, the density needs to be at least 940 $kg/m^3$ and to meet PE100 requirements the density needs to be above 945 $kg/m^3$. To meet PE125 requirements an even higher density than for PE100 is needed. Besides the high density, multimodal polyethylene resins for the production of pipes should exhibit excellent mechanical and impact properties while maintaining good processability. In general, these properties depend on the molecular weight of the polyethylene composition. The higher the molecular weight, the greater are e.g. impact strength, sagging behavior and rapid crack propagation properties. Accordingly, improved impact and mechanical properties can be achieved by increasing the molecular weight of at least one polyethylene fraction in a polyethylene composition.

However, this usually leads to a loss in homogeneity due to an increased difference in the viscosity between the higher and the lower molecular weight fraction. These compatibility problems particularly apply in the case an ultra high molecular weight fraction (UHMW) is included into a polyethylene composition for further improving the impact mechanical properties, as it becomes more and more difficult to homogenize the ultra high molecular weight particles into the polymer matrix.

These ultra high molecular weight particles then occur as so-called "white spots" in the compounded material and may cause roughness or surface defects in the articles, such as pipes, produced from the polyethylene composition. That is, low degrees of homogeneity adversely affect the surface properties of the polymer composition.

The beneficial effect of including an UHMW polyethylene fraction into HDPE via extrusion has been investigated and carried out using a co-rotating twin screw extruder by Hung and Brown (Polymer, 1992, 33, 2989-2997). However, although the UHMW polyethylene particles where found to be well bonded in the matrix, helping to slow down the rate of crack propagation, the UHMW polyethylene was found to remain in separate domains with no evidence of "melting" into the HDPE matrix.

EP 2 860 204 A1 and EP 2 860 201 A1, both in the name of Borealis AG, disclose polyethylene compositions

suitable for pipes meeting PE125 requirements which comprise a UHMW component polymerized in the polymerization stage. These polyethylene compositions, although showing a good homogenization of the UHMW component into the polymeric melt still need improvement in regard of pressure resistance especially at elevated temperatures.

Thus, there is still a need for polyethylene compositions comprising a multimodal ethylene copolymer with a high density for the production of pipes which show improved balance of properties regarding processability, mechanical properties such as tensile properties and sagging behavior, rheological properties, as well as slow crack propagation properties together with a good homogeneity.

## Summary of the invention

The present invention relates to a polyethylene composition comprising a base resin having a density of from 950.0 kg/m$^3$ to 962.0 kg/m$^3$, determined according to ISO 1183, and
the polyethylene composition has a melt flow rate $MFR_{21}$ (190°C, 21.16 kg), of from 1.0 to 9.0 g/10 min, determined according to ISO 1133, a viscosity at a constant shear stress of 747 Pa $eta_{747}$ of from 3500 kPa·s to 20000 kPa·s.

It has surprisingly been found that by increasing the viscosity at a constant shear stress $eta_{747}$ of polyethylene base resins having a high density to the claimed range the rheological properties, pressure resistance and slow crack propagation resistance can be significantly improved while maintaining suitable processability, good mechanical properties such as tensile properties and sagging behavior as well as a good homogeneity.

In one aspect the present invention further relates to a polyethylene composition obtainable by a multistage process, the multistage process comprising the following steps:

a) polymerizing ethylene in the presence of a solid Ziegler-Natta catalyst component in a first reactor for obtaining a first intermediate material, the first intermediate material having a melt flow rate $MFR_2$ (190°C, 2.16 kg) of 5.0 to 300 g/10min,
b) transferring the first intermediate material to a second reactor

(i) feeding ethylene to the second reactor
(ii) further polymerizing the first intermediate material

for obtaining a second intermediate material, the second intermediate material having a melt flow rate $MFR_2$ (190°C, 2.16 kg) of 80 to 300 g/10min; and
d) transferring the second intermediate material to a third reactor

(i) feeding ethylene and comonomer selected from alpha-olefins having from 4 to 12 carbon atoms to the fourth reactor
(ii) further polymerizing the second intermediate material in the presence of a silane type external donor

for obtaining a base resin having density of from 950.0 kg/m$^3$ to 962.0 kg/m$^3$, determined according to ISO 1183, and
e) extruding the base resin into a polyethylene composition having a melt flow rate $MFR_{21}$ (190°C, 21.16 kg) of from 1.0 to 9.0 g/10 min, determined according to ISO 1133, and a viscosity at a constant shear stress of 747 Pa $eta_{747}$ of from 3500 kPa·s to 20000 kPa·s.

The present invention further relates to a process for producing the polyethylene composition as defined above or below, wherein the base resin is polymerized in a multistage process in at least three sequential reactor stages in any order in the presence of a solid Ziegler-Natta catalyst component.

Still further, the present invention relates to an article, such as a pipe or pipe fitting, comprising the polyethylene composition as defined above or below.

Additionally, the present invention relates to the use of the polyethylene composition as defined above or below for the production of an article, such as a pipe or pipe fitting.

## Definitions

A polyethylene composition according to the present invention denotes a composition comprising one or more polymers, wherein the molar amounts of the components of the polymer composition add up to a total amount of at least 50 mol-% ethylene monomer units. The term 'base resin' denotes the polymeric part of the polyethylene composition without fillers such as carbon black. A person skilled in the art will understand that the measurements as to the base resin require the presence of stabilizers.

In addition to the base resin, usual additives for utilization with polyolefins, such as pigments (e.g. carbon black),

stabilizers (e.g. antioxidant agents), antacids and/or anti-UV's, antistatic agents and utilization agents (such as processing aid agents) may be present in the polyethylene composition. Preferably, the amount of these additives is 10 wt% or below, more preferably 9 wt% or below, most preferably 7 wt% or below, of the composition. Preferably, the composition comprises carbon black in an amount of 8 wt% or below, more preferably in an amount of 1 to 6 wt%, of the total composition.

Further preferred, the amount of additives different from carbon black is 1 wt% or less, more preferably 0.5 wt% or less.

An 'ethylene homopolymer' denotes a polymer consisting essentially of ethylene monomer units. Due to the requirements of large-scale polymerization it may be possible that the ethylene homopolymer includes minor amounts of comonomer units, which usually is below 0.05 mol%, most preferably below 0.01 mol% of the ethylene homopolymer.

A polymer is denoted 'ethylene copolymer' if the polymer is derived from ethylene monomer units and at least one alpha-olefin comonomer. The alpha-olefin conomoner preferably is selected from alpha-olefin conomoners with 4 to 12 carbon atoms, more preferably 4 to 8 carbon atoms. Suitable alpha-olefin comonomer species are 1-butene, 1-hexene, 4-methyl-1-pentene, 1-octene or their mixtures. Preferred are 1-butene and 1-hexene.

A polyethylene composition or base resin comprising more than one fraction differing from each other in at least one property, such as weight average molecular weight or comonomer content, is called "multimodal". If the multimodal polyethylene composition or base resin includes two different fractions, it is called "bimodal" and, correspondingly, if it includes three different fractions, it is called "trimodal". The form of the molecular weight distribution curve, i.e. the appearance of the graph of the polymer weight fraction as function of its molecular weight, of such a multimodal polyethylene composition or base resin will show two or more maxima depending on the modality or at least be distinctly broadened in comparison with the curves of the individual fractions.

All rheological measurements can be performed with the base resin and with the polyethylene composition. As a matter of definition, all rheological properties shall preferably also apply to the polyethylene composition.

## Detailed description

*Base resin*

The base resin according to the present invention preferably comprises, more preferably consists of, a copolymer of ethylene with at least one alpha olefin comonomer having from 4 to 12 carbon atoms.

The base resin may comprise other polymers differing from the copolymer of ethylene with at least one alpha olefin comonomer having from 4 to 12 carbon atoms. It is, however, preferred that the base resin consists of the copolymer of ethylene with at least one alpha olefin comonomer having from 4 to 12 carbon atoms.

Preferably the alpha olefin comonomers are selected from alpha olefins having from 4 to 8 carbon atoms, such as 1-butene, 1-hexene, 4-methyl-1-pentene and 1-octene. Especially preferred are 1- butene and 1-hexene. Mostly preferred is 1-hexene.

The ethylene copolymer may further comprise further comonomer units different from alpha olefin comonomers such as dienes, polar comononers or silicon containing comonomers. It is, however, preferred that the ethylene copolymer only contains alpha olefin monomers as comonomer units.

It is especially preferred that the ethylene copolymer contains 1-butene and/or 1-hexene as comonomer units.

In one embodiment, the ethylene copolymer comprises one alpha-olefin comonomer. In this embodiment the alpha-olefin comonomer preferably is 1-hexene and the ethylene copolymer preferably is an ethylene/1-hexene copolymer.

In another embodiment the ethylene copolymer comprises more than one, preferably two, alpha-olefin comonomers. In this embodiment the alpha-olefin comonomer preferably are at least 1-butene and 1-hexene and the ethylene copolymer preferably is an ethylene/1-butene/1-hexene copolymer.

The content of units derived from at least one alpha olefin comonomer having from 4 to 12 carbon atoms in the base resin is preferably 0.01 to 0.50 mol%, more preferably of from 0.02 to 0.40 mol% and most preferably of from 0.05 to 0.35 mol%, based on the monomer content of the base resin.

*Density (base resin)*

The base resin according to the present invention has a density of equal to or more than 950.0 kg/$m^3$ and equal to or less than 962.0 kg/$m^3$. Preferably the density of the base resin is equal to or more than 950.5 kg/$m^3$ and equal to or less than 961.0 kg/$m^3$, more preferably of equal to or more than 951.0 kg/$m^3$ and equal to or less than 960.0 kg/$m^3$.

The present invention the base resin preferably comprises at least three ethylene homo- or copolymer fractions (A), (B) and (C) which differ in their weight average molecular weight Mw and/or their comonomer content.

Fraction (A) can be an ethylene homopolymer or an ethylene copolymer.

When fraction (A) is an ethylene copolymer the comonomer units are preferably selected from alpha-olefin comonomers having from 4 to 12 carbon atoms.

Suitable comonomers are 1-butene, 1-hexene and 1-octene, more preferably 1-butene and 1-hexene and most preferably 1-butene.

Preferably, fraction (A) is an ethylene homopolymer.

Suitably, the fraction (A) has a melt flow rate $MFR_2$ (190°, 2.16 kg) of from 5.0 to 300 g/10 min, preferably of from 6.0 to 275 g/10 min, more preferably of from 7.0 to 250 g/10 min. Fraction (A) is preferably present in an amount of 10 to 30 wt%, more preferably in an amount of 12 to 27 wt% and most preferably in an amount of 15 to 24 wt% with respect to the base resin.

Fraction (B) can be an ethylene homopolymer or an ethylene copolymer.

When fraction (B) is an ethylene copolymer the comonomer units are preferably selected from alpha-olefin comonomers having from 4 to 12 carbon atoms.

Preferably the ethylene copolymer of fraction (B) includes the same comonomer as the ethylene copolymer of fraction (A).

Suitable comonomers are 1-butene, 1-hexene and 1-octene, more preferably 1-butene and 1-hexene and most preferably 1-butene.

In one especially preferred embodiment fraction (B) is an ethylene/1-butene copolymer.

It is preferred that fraction (B) is an ethylene homopolymer.

Fraction (B) preferably has a comparable weight average molecular weight compared to fraction (A). Consequently, the melt flow rate of the combined fractions (A) and (B) is comparable to the melt flow rate of fraction (A).

Suitably, the combined fractions (A) and (B) have a melt flow rate $MFR_2$ (190°, 2.16 kg) of from 80 to 300 g/10 min, preferably of from 90 to 275 g/10 min, more preferably of from 100 to 250 g/10 min.

Fraction (B) is preferably present in an amount of 25 to 50 wt%, more preferably in an amount of 30 to 47 wt% and most preferably in an amount of 35 to 42 wt% with respect to the base resin.

The combined fractions (A) and (B) are present in an amount of 52 to 67 wt%, more preferably in an amount of 53 to 65 wt% and most preferably in an amount of55 to 63 wt% with respect to the base resin.

Optionally, the base resin can comprise an additional fraction (P).

Optional fraction (P) can be an ethylene homopolymer or an ethylene copolymer.

When optional fraction (P) is an ethylene copolymer the comonomer units are preferably selected from alpha-olefin comonomers having from 4 to 12 carbon atoms. Suitable comonomers are 1-butene, 1-hexene and 1-octene, more preferably 1-butene and 1-hexene and most preferably 1-butene.

Preferably the optional ethylene copolymer of fraction (P) includes the same comonomer as the ethylene copolymer of fraction (A).

It is preferred that optional fraction (P) is an ethylene homopolymer.

Preferably, optional fraction (P) has a high weight average molecular weight Mw which can be seen from its very low melt flow rate $MFR_5$.

Optional fraction (P) is preferably present in an amount of 0 to 10 wt%, more preferably in an amount of 0 to 7.5 wt% and most preferably in an amount of 0 to 5.0 wt% with respect to the base resin.

Optional fraction (P) preferably has a higher weight average molecular weight than fractions (A) and (B). Consequently, the melt flow rate of combined fractions (A), (B) and (P) is lower than the melt flow rate of fraction (A), (B) and combined fractions (A) and (B).

Suitably, the combined fractions (A), (B) and (P) have a melt flow rate $MFR_2$ (190°, 2.16 kg) of from 80 to 300 g/10 min, preferably of from 90 to 275 g/10 min, more preferably of from 100 to 250 g/10 min.

The combined fractions (A), (B) and (P) are present in an amount of 52 to 67 wt%, more preferably in an amount of 53 to 65 wt% and most preferably in an amount of55 to 63 wt% with respect to the base resin.

In one embodiment fractions (A) and (B) and optional fraction (P), when present, are all ethylene homopolymers. In said embodiment fractions (A) and (B) and optional fraction (C), when present, usually cannot be clearly distinguished in the resultant base resin so that the base resin including fractions (A), (B) and (C) and optional fraction (P), when present, qualifies as a bimodal base resin.

In another embodiment fractions (A) and (B) and optional fraction (P), when present, are all copolymers of ethylene and at least one alpha-olefin comonomer units with 4 to 12 carbon atoms. Preferably the alpha olefin comonomers are selected from alpha olefins having from 4 to 8 carbon atoms, such as 1-butene, 1-hexene, 4-methyl-1-pentene and 1-octene. Especially preferred are 1- butene and 1-hexene. Mostly preferred is 1-butene.

Fractions (A) and (B) and optional fraction (P) may further comprise further comonomer units different from alpha olefin comonomers such as dienes, polar comononers or silicon containing comonomers. It is, however, preferred that the fractions (A) and (B) and optional fraction (P) only contain alpha olefin monomers as comonomer units.

Fraction (C) preferably is a copolymer of ethylene and at least one alpha-olefin comonomer units with 4 to 12 carbon atoms.

Preferably the alpha olefin comonomers are selected from alpha olefins having from 4 to 8 carbon atoms, such as 1-butene, 1-hexene, 4-methyl-1-pentene and 1-octene. Especially preferred are 1- butene and 1-hexene. Mostly preferred is 1-hexene.

Fraction (C) may further comprise further comonomer units different from alpha olefin comonomers such as dienes, polar comononers or silicon containing comonomers. It is, however, preferred that the fraction (C) only contains alpha olefin monomers as comonomer units.

In one especially preferred embodiment of said aspect of the present invention fraction (C) is an ethylene/1-hexene copolymer.

The content of units derived from at least one alpha olefin comonomer having from 4 to 12 carbon atoms in fraction (C) is preferably 0.01 to 1.5 mol%, more preferably 0.04 to 1.2 mol%, most preferably 0.06 to 1.0 mol%.

Fraction (C) preferably has a higher weight average molecular weight than fractions (A) and (B) and optional fraction (P). Consequently, the melt flow rate of the combined fractions (A), (B) and (C) and optional fraction (P), when present, preferably the melt flow rate of the base resin, is lower than the melt flow rates of the combined fractions (A) and (B) and the combined fractions (A), (B) and (P).

Suitably, the combined fractions (A), (B) and (C) and optional fraction (P), when present, preferably the base resin, have a melt flow rate $MFR_5$ (190°, 5 kg) of not more than 0.30 g/10 min, preferably not more than 0.20 g/10 min and more preferably not more than 0.15 g/10 min. In some embodiments the melt flow rate $MFR_5$ (190°, 5 kg) of the combined fractions (A), (B) and (C) and optional fraction (P), when present, preferably of the base resin, is not detectable.

Suitably, the combined fractions (A), (B) and (C) and optional fraction (P), when present, preferably the base resin, have a melt flow rate $MFR_{21}$ (190°, 21.6 kg) of from 1.0 to 10.0 g/10 min, preferably of from 2.0 to 9.0 g/10 min and more preferably of from 2.5 to 8.5 g/10 min.

Fraction (C) is preferably present in an amount of 33 to 48 wt%, more preferably in an amount of 35 to 47 wt% and most preferably in an amount of 37 to 45 wt% with respect to the base resin.

It is preferred that the base resin is multimodal. Mostly preferred the base resin is bimodal.

**Polyethylene composition**

In addition to the base resin, the polyethylene composition may comprise and preferably comprises usual additives for utilization with polyolefins, such as stabilizers (e.g. antioxidant agents), metal scavengers and/or UV-stabilizers, antistatic agents and utilization agents (such as processing aid agents). Preferably, the amount of these additives is 10 wt% or below, more preferably 9 wt% or below, more preferably 7 wt% or below, of the polyethylene composition.

Further preferred, the amount of additives different from carbon black is 0 wt% to 1 wt%, more preferably 0.001 wt% to 0.8 wt%, based on the total amount of the polyethylene composition.

The polyethylene composition comprises carbon black in an amount of 1.0 to 10 wt%, preferably 1.5 to 9.0 wt%, more preferably 1.8 to 8.0 wt%, still more preferably 1.8 to 7.0 wt%, and most preferably 1.8 to 6.0 wt%, based on the total amount of the polyethylene composition.

Carbon black can be added to polyethylene composition as such (neat) or in form of so-called master batch (CBMB), in which carbon black, and optionally further additives as defined above, are contained in concentrated form in a carrier polymer.

The optional carrier polymer of carbon black masterbatch is not calculated to the amount of the polymer components present in the polyethylene composition. In other words, it is to be understood that carbon black and optional additive(s) may be added to the polyethylene composition in form of a masterbatch, i.e. together with a carrier polymer. In such case the carrier polymer is not considered as polymer component(s), but is calculated into the amount (wt%) of carbon black or, respectively, into the amount (wt%) of additive(s).

The amount of the optional carrier polymer of the carbon black master batch is 0 to 5 wt% based on the total amount of the polyethylene composition.

Most preferably the polyethylene composition consists of the base resin, carbon black and optional further additives other than carbon black.

The polyethylene composition is characterized by the following properties:

*Comonomer content*

The polyethylene composition preferably has a total content of comonomer units other than ethylene, preferably of at least one alpha-olefin having from 4 to 12 carbon atoms, most preferably 1-hexene, of from 0.01 to 0.50 mol%, more preferably of from 0.02 to 0.40 mol% and most preferably of from 0.05 to 0.35 mol%, based on the total molar amount of monomer units in the polyethylene composition.

Preferably, the polyethylene composition only comprises 1-hexene as comonomer. In the case that other

comonomer(s), such as 1-butene, are present in the polymerization process, it is preferred that the amount of the other comonomer(s), such as 1-butene, is not qualifyable in the final polyethylene composition.

*$MFR_5$*

The polyethylene composition preferably has a melt flow rate $MFR_5$ (190°C, 5 kg) of not more than 0.20 g/10 min, more preferably of not more than 0.17 g/10min,even more preferably of not more than 0.15 g/10min and most preferably of not more than 0.10 g/10min determined according to ISO 1133.

In some embodiments the melt flow rate $MFR_5$ (190°, 5 kg) of the polyethylene composition is not detectable.

*$MFR_{21}$*

The polyethylene composition according to the present invention has a melt flow rate $MFR_{21}$ (190°C, 21.6 kg) of 1.0 to 9.0 g/10 min, preferably of 1.5 to 8.5 g/10 min, more preferably of 2.0 to 8.0 g/10min and most preferably of 2.5 to 8.7 g/10min determined according to ISO 1133.

*Weight average molecular weight Mw*

The polyethylene composition preferably has a weight average molecular weight, Mw, in the range of 300 to 750 kg/mol, more preferably 375 to 700 kg/mol, most preferably in the range of 430 to 600 kg/mol.

*Number average molecular weight Mn*

The polyethylene composition preferably has a number average molecular weight, Mn, in the range of 3 to 20 kg/mol, more preferably 4 to 17 kg/mol, most preferably in the range of 6 to 15 kg/mol.

*z average molecular weight Mz*

The polyethylene composition preferably has a z average molecular weight, Mz, in the range of 1800 to 3000 kg/mol, more preferably 2000 to 2950 kg/mol, most preferably in the range of2200 to 2900 kg/mol.

*Molecular weight distribution Mw/Mn*

The polyethylene composition preferably has a molecular weight distribution, Mw/Mn, in the range of 25 to 100, more preferably in the range of 30 to 90 and most preferably in the range of 35 to 85.

*Density*

The composition according to the present invention preferably has a density of more than 959 kg/$m^3$ and equal to or less than 990 kg/$m^3$, more preferably of equal to or more than 960 kg/$m^3$ and equal to or less than 980 kg/$m^3$, most preferably of equal to or more than 961 kg/$m^3$ and equal to or less than 975 kg/$m^3$, determined according to ISO 1183-1:2004.

The density of the composition is influenced by the density of the base resin and can further be adjusted by the amount of filler, usually carbon black, in the composition.

The density of the base resin is mainly influenced by the amount and type of comonomer. In addition to that, the nature of the polymer originating mainly from the catalyst used as well as the melt flow rate play a role. In addition to that, it should be stressed that the comonomer does not need to be a single comonomer. Mixtures of comonomers are also possible.

The composition is further characterized by specific rheological properties.

*$eta_{0.05}$*

The polyethylene composition according to the invention has a complex viscosity at 0.05 rad/s $eta_{0.05}$ of from 600 kPa·s to 2000 kPa·s, preferably of from 620 kPa·s to 1900 kPa·s, more preferably of from 640 kPa·s to 1800 kPa·s, and most preferably of from 650 kPa·s to 1750 kPa·s.

The viscosity $eta_{0.05}$ is measured at a low frequency and thus a low shear stress and is proportional to the molecular weight of the composition. It can thus be seen as a measure for the molecular weight of the polyethylene composition.

*$eta_{300}$*

The polyethylene composition preferably has a complex viscosity at 300 rad/s $eta_{300}$ of 750 Pa·s to 2000 Pa·s, more preferably 900 Pa·s to 1900 Pa·s, and most preferably 1100 Pa·s to 1800 Pa·s.
The viscosity $eta_{300}$ is measured at a high frequency and thus a high shear stress and is inversely proportional to the flowability of the composition. It can thus be seen as a measure for the processability of the polyethylene composition.

*PI*

The polyethylene composition preferably has a polydispersity index PI within the range of equal to or higher than 2.0 $Pa^{-1}$ and equal to or less than 7.5 $Pa^{-1}$, more preferably within the range of equal to or higher than 2.2 $Pa^{-1}$ and equal to or less than 6.0 $Pa^{-1}$ and most preferably within the range of equal to or higher than 2.5 $Pa^{-1}$ and equal to or less than 5.5 $Pa^{-1}$.
The polydispersity index PI is a rheological measure for the broadness of the molecular weight distribution.

*Viscosity at a constant shear stress of 747 Pa $eta_{747}$*

The polyethylene composition according to the present invention preferably has a viscosity at a constant shear stress of 747 Pa $eta_{747}$ of 2000 kPa·s to 20000 kPa·s, more preferably 3000 kPa·s to 17500 kPa·s and most preferably 3500 kPa·s to 15000 kPa·s.
The viscosity at a constant shear stress of 747 Pa $eta_{747}$ is influenced by the weight average molecular weight and is a measure for the sagging properties of the polyethylene composition.
The rheological properties, such as PI, $eta_{0.05}$, $eta_{300}$ and $eta_{747}$ described above, have been determined on the polyethylene composition which differs from the base resin by comprising additional components such as carbon black. These properties, however, can also be determined on the base resin, which has been stabilized with a stabilizer package. The rheological properties determined on the base resin are preferably in the same ranges as when determined on the polyethylene composition.

*White spot rating (WSR)*

The polyethylene composition according to the present invention has a white spot rating of not more than 21, more preferably of not more than 20, even more preferably of not more than 19 and most preferably of not more than 18 determined according to ISO 18553/2002-03-01.
The lower limit of the white spot rating is usually not higher than 3.0, preferably not higher than 5.0.
The white spot rating test is a measure for the homogeneity of a polyethylene composition and based on ISO 18553/2002-03-01. When compounding polyethylene compositions e.g. for producing pipes, so-called "white spots" occur in the compounded material. These white spots usually have a size of below 10 to about 75 micrometer and consist of non-pigmented, high molecular weight polymer agglomerates/particles that have not been adequately dispersed in the composition. These inhomogeneities in polymer compositions may increase roughness of the surface of articles produced thereof.
It is known that homogeneity of a multimodal polymer composition can be improved by applying multiple compounding steps and/or particular compounding conditions to the resin coming from the reactor. These measures, however, have the disadvantage that they are associated with a significant increase in production costs for the composition.
Thus, the white spot rating of the composition according to the present invention is determined after a single compounding step of the base resin in a twin extruder at an extruder temperature before die plate of not more than 300°C and a specific energy input SEI of not more than 350 kWh/ton.

*Tensile modulus*

The polyethylene composition preferably has a tensile modulus, determined according to ISO 527-2:1993 of equal to or more than 1000 MPa, more preferably of equal to or more than 1100 MPa, and most preferably of equal to or more than 1150 MPa. The upper limit of the tensile modulus is usually not higher than 2000 MPa, preferably not higher than 1800 MPa.

*Tensile strain at break*

The polyethylene composition preferably has a tensile strain at break determined according to ISO 527-1 of at

least 350 %, more preferably of at least 400 %, even more preferably of at least 420 %, and most preferably of at least 430 %. The upper limit of the tensile strain at break is usually equal to or less than 700 %, more preferably equal to or less than 650 %.

*Tensile stress at break*

The polyethylene composition preferably has a tensile stress at break determined according to ISO 527-1 of at least 15 MPa, more preferably of at least 18 MPa, even more preferably of at least 20 MPa, and most preferably of at least 21 MPa. The upper limit of the tensile stress at break is usually equal to or less than 60 MPa, more preferably equal to or less than 50 MPa.

*Tensile strain at yield*

The polyethylene composition preferably has a tensile strain at yield determined according to ISO 527-1 of at least 6.0 %, more preferably of at least 6.5 %, even more preferably of at least 7.0 %, and most preferably of at least 7.5 %. The upper limit of the tensile strain at yield is usually equal to or less than 15 %, more preferably equal to or less than 12 %.

*Tensile stress at yield*

The polyethylene composition preferably has a tensile stress at break determined according to ISO 527-1 of at least 15 MPa, more preferably of at least 18 MPa, even more preferably of at least 20 MPa, and most preferably of at least 22 MPa. The upper limit of the tensile stress at break is usually equal to or less than 50 MPa, more preferably equal to or less than 40 MPa.

*Charpy notched impact strength (0°C)*

The polyethylene composition preferably has a Charpy notched impact strength (NIS) determined according to ISO 179/ 1eA:2000 at a temperature of 0°C of at least 15 $kJ/m^2$, more preferably of at least 20 $kJ/m^2$, and most preferably at least 25 $kJ/m^2$. The upper limit of the Charpy notched impact strength is usually not higher than 100 $kJ/m^2$, preferably not higher than 80 $kJ/m^2$.

*Charpy notched impact strength (-20°C)*

The polyethylene composition preferably has a Charpy notched impact strength (NIS) determined according to ISO 179/ 1eA:2000 at a temperature of -20°C of at least 10 $kJ/m^2$, more preferably of at least 15 $kJ/m^2$, and most preferably at least 20 $kJ/m^2$. The upper limit of the Charpy notched impact strength is usually not higher than 100 $kJ/m^2$, preferably not higher than 80 $kJ/m^2$.

*Relaxation spectrum index (RSI)*

The polyethylene composition preferably has a relaxation spectrum index (RSI) of equal to or more than 100, more preferably of equal to or more than 500, still more preferably of equal to or more than 800 and most preferably of equal to or more than 1100. The upper limit of the relaxation spectrum index (RSI) is usually not higher than 5000, preferably not higher than 2500.

The polyethylene composition preferably has a correlated relaxation spectrum index (cRSI) of equal to or more than 1000, more preferably of equal to or more than 2000, and most preferably of equal to or more than 2400. The upper limit of the correlated relaxation spectrum index (cRSI) is usually not higher than 15000, preferably not higher than 12500.

The relaxation spectrum index (RSI) can be used to quantify the effect of coupling on the long-relaxation time behavior of a polymer. Rheological Spectrum Index (RSI) is thus a rheological parameter which can be used in the art as indicator of inter alia flowability of a polymer material.

The relaxation spectrum index (RSI) can also be correlated to the melt flow rate and the molecular weight distribution of the polyethylene composition. The correlated relaxation spectrum index (cRSI) is calculated according to

$$cRSI = Mw/Mn \cdot MFR_5 \cdot RSI.$$

Preferably the present invention further relates to a polyethylene composition obtainable by a multistage process,

the multistage process comprising the following steps:

a) polymerizing ethylene in the presence of a solid Ziegler-Natta catalyst component in a first reactor for obtaining a first intermediate material, the first intermediate material having a melt flow rate $MFR_2$ (190°C, 2.16 kg) of 5.0 to 300 g/10min,
b) transferring the first intermediate material to a second reactor

(i) feeding ethylene to the second reactor
(ii) further polymerizing the first intermediate material

for obtaining a second intermediate material, the second intermediate material having a melt flow rate $MFR_2$ (190°C, 2.16 kg) of 80 to 300 g/10min; and
c) transferring the second intermediate material to a third reactor

(i) feeding ethylene and comonomer selected from alpha-olefins having from 4 to 12 carbon atoms to the third reactor
(ii) further polymerizing the second intermediate material in the presence of a silane type external donor

for obtaining a base resin having density of from 950.0 kg/m$^3$ to 962.0 kg/m$^3$, determined according to ISO 1183, and
d) extruding the base resin into a polyethylene composition having a melt flow rate $MFR_{21}$ (190°C, 21.16 kg), of from 1.0 to 9.0 g/10 min, determined according to ISO 1133, and a viscosity at a constant shear stress of 747 Pa $eta_{747}$ of from 3500 kPa·s to 20000 kPa·s.

The first intermediate material preferably comprises fraction (A) as defined above or below. More preferably, the first intermediate material essentially consists of fraction (A) optionally together with unreacted monomers, solid Ziegler-Natta catalyst and optional unreacted chain transfer agent such as hydrogen.

The second intermediate material preferably comprises fractions (A) and (B) as defined above or below. More preferably, the second intermediate material essentially consists of fractions (A) and (B) optionally together with unreacted monomers, solid Ziegler-Natta catalyst and optional unreacted chain transfer agent such as hydrogen.

The base resin preferably comprises fractions (A), (B) and (C) as defined above or below. More preferably, the base resin essentially consists of fractions (A), (B) and (C).

In one embodiment the polymerization step a) can be preceded by an additional polymerization step p).

In optional polymerization step p) ethylene and optionally comonomer selected from alpha olefins having from 4 to 12 carbon atoms are polymerized in the presence of a solid Ziegler-Natta catalyst component in a pre-first reactor for obtaining a pre-first intermediate material. Said pre-first intermediate material is then transferred to the first reactor in order to polymerize the first intermediate material in process step a) as defined above.

The pre-first intermediate material preferably comprises fraction (P) as defined above or below. More preferably, the pre-first intermediate material essentially consists of fraction (P) optionally together with unreacted monomers, solid Ziegler-Natta catalyst and optional unreacted chain transfer agent such as hydrogen.

In the case of the presence of optional fraction (P), the first intermediate material preferably comprises fractions (P) and (A) as defined above or below. More preferably, the first intermediate material essentially consists of fractions (P) and (A) optionally together with unreacted monomers, solid Ziegler-Natta catalyst and optional unreacted chain transfer agent such as hydrogen.

Further, in said embodiment, the second intermediate material preferably comprises fractions (P), (A) and (B) as defined above or below. More preferably, the second intermediate material essentially consists of fractions (P), (A) and (B) optionally together with unreacted monomers, solid Ziegler-Natta catalyst and optional unreacted chain transfer agent such as hydrogen.

The base resin preferably comprises fractions (A), (B) and (C) and optional fraction (P) as defined above or below. More preferably, the base resin essentially consists of fractions (A), (B) and (C) and optional fraction (P).

The base resin and the polyethylene composition obtainable by the above described multistage process are preferably further defined by the properties of the base resin and the polyethylene composition described above or in claims.

Most preferably the polyethylene composition consists of the base resin, carbon black and optional further additives other than carbon black.

## Article

In yet a further aspect, the present invention is concerned with an article comprising the polyethylene composition

as described above, obtainable by a multistage process as described above and the use of such a polyethylene composition for the production of an article.

The article is preferably a pipe or pipe fitting.

Such pipes are further characterized by the following properties.

*Resistance to internal pressure*

The pipe comprising the polyethylene composition according to the present invention preferably has a resistance to internal pressure in a pressure test on un-notched pipes (PT) determined according to ISO 1167-1:2006 at a hoop stress of 13.9 MPa and a temperature of 20°C of at least 75 h, more preferably of at least 85 h and most preferably at least 100 h. The upper limit of the resistance to internal pressure is usually not higher than 1500 h, preferably not higher than 1000 h, still more preferably not higher than 500 h and most preferably not higher than 400 h.

Furthermore, the pipe comprising the polyethylene composition according to the present invention preferably has a resistance to internal pressure in a pressure test on un-notched pipes (PT) determined according to ISO 1167-1:2006 at a hoop stress of 13.6 MPa and a temperature of 20°C of at least 150 h, more preferably of at least 200 h and most preferably at least 300 h. The upper limit of the resistance to internal pressure is usually not higher than 5000 h, preferably not higher than 3000 h, still more preferably not higher than 1500 h and most preferably not higher than 1200 h.

Still further, the pipe comprising the polyethylene composition according to the present invention preferably has a resistance to internal pressure in a pressure test on un-notched pipes (PT) determined according to ISO 1167-1:2006 at a hoop stress of 13.4 MPa and a temperature of 20°C of at least 350 h, more preferably of at least 500 h and most preferably at least 650 h. The upper limit of the resistance to internal pressure is usually not higher than 10000 h, preferably not higher than 5000 h, still more preferably not higher than 3500 h and most preferably not higher than 3000 h.

Further, the pipe comprising the polyethylene composition according to the present invention preferably has a resistance to internal pressure in a pressure test on un-notched pipes (PT) determined according to ISO 1167-1:2006 at a hoop stress of 12.9 MPa and a temperature of 20°C of at least 1000 h, more preferably of at least 1250 h and most preferably at least 1500 h. The upper limit of the resistance to internal pressure is usually not higher than 20000 h, preferably not higher than 15000 h, still more preferably not higher than 10000 h and most preferably not higher than 7500 h.

**Process**

The polyethylene composition is produced in a process, wherein the base resin is polymerized in a multistage process in at least three sequential reactor stages in any order in the presence of a solid Ziegler-Natta catalyst component.

<u>Catalyst</u>

In general, the solid Ziegler-Natta catalyst component comprises a compound of a transition metal (TM), which transition metal is selected from one of the groups 4 to 6 of the periodic table (IUPAC). Preferably, the compound of a transition metal (TM) is a titanium compound, most preferably a titanium halide, like $TiCl_4$.

Additionally, the catalyst comprises a compound of a metal (M) which metal is selected from one of the groups 1 to 3 of the periodic table (IUPAC). Preferably, the catalyst comprises a metal of group 2 of the periodic table (IUPAC), more preferably a magnesium compound.

In one embodiment, the solid Ziegler-Natta catalyst component thus comprises

(a1) a compound of a transition metal (TM), which transition metal is selected from one of the groups 4 to 6 of the periodic table (IUPAC), preferably a titanium compound,
(a2) a compound of a metal (M) which metal is selected from one of the groups 1 to 3 of the periodic table (IUPAC), preferably a metal of group 2 of the periodic table (IUPAC), more preferably a magnesium compound,
(a3) optionally an internal donor (ID) and
(a4) optionally a compound of Group 13 metal, preferably an aluminum compound.

If an internal donor (ID) is present, the internal donor (ID) is selected from among others, esters of carboxylic acids or dicarboxylic acids, like phthalates, maleates, substituted maleates, benzoates, and succinates, ethers and diethers or oxygen or nitrogen containing silicon compounds, or mixtures thereof.

The solid Ziegler-Natta catalyst component is typically a supported catalyst, wherein the support material is a particulate support, typically inorganic oxide support, such as silica, alumina, titania, silica-alumina, silica-titania or a $MgCl_2$ based support onto which active catalyst components are loaded. Preferably, the support is silica or a $MgCl_2$ based support. Alternatively the solid Ziegler-Natta catalyst component is prepared without using any external support

material, but instead is formed by a method where all active catalyst compounds are contacted and/or reacted in liquid with each other, and after that the solid catalyst is formed. The solid catalyst particles are formed via emulsion-solidification or via precipitation method.

In addition to the solid catalyst component the Ziegler-Natta catalyst comprises a cocatalyst. The cocatalyst typically comprises an aluminium trialkyl or aluminium alkyl halide compound, wherein alkyl groups typically contain 1 to 20 C-atoms, e.g. 1 to 10 C-atoms. The aluminium alkyl compound is preferably trialkyl aluminium, such as trimethylaluminium, triethylaluminium, tri-isobutylaluminium or tri-n-octylaluminium or dialkylaluminium halide, alkyl aluminium dihalide or alkyl aluminium sesquihalide, such as diethylaluminium chloride, dimethylaluminium chloride, ethylaluminium dichloride or ethylaluminium sesquichloride. Especially suitable cocatalysts are triethylaluminium (TEA) and diethylaluminium chloride (DEAC).

Further, the catalyst may comprise an external electron donor. Suitable external electron donors (ED) are silane type external donors. Silane type external donors are typically organosilane compounds containing Si-OCOR, Si-OR, or Si-$NR_2$ bonds, where R is an alkyl, alkenyl, aryl, arylalkyl or cycloalkyl with 1-20 carbon atoms are known in the art.

It is especially preferred to use silanes selected from compounds of the general formula $R^a{}_pR^b{}_qSi(OR^c)_{(4-p-q)}$ wherein $R^a$, $R^b$ and $R^c$ denote a hydrocarbyl radical, in particular an alkyl or cycloalkyl group, and wherein p and q are numbers ranging from 0 to 3 with the sum p + q being equal to or less than 3. $R^a$, $R^b$ and $R^c$ can be chosen independently from one another and are linear, branched or cyclic hydrocarbyl groups having 1 to 12 carbon atoms, preferably $R^a$, $R^b$ and $R^c$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

An especially suitable external donor for polymerizing the base resin of the polyethylene composition of the present invention is dimethoxydimethylsilane (DMDS), if present.

Cocatalyst and the optional external electron donors are thus not part of the solid catalyst component, but fed as separate components into the off-line pre-polymerization and/or into the polymerization process.

Examples of suitable catalysts and compounds in catalysts are shown among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754, WO 03/000755, WO 2004/029112, EP 2610271, WO 2012/007430. WO 92/19659, WO 92/19653, WO 92/19658, US 4382019, US 4435550, US 4465782, US 4473660, US 4560671, US 5539067, US5618771, EP45975, EP45976, EP45977, WO 95/32994, US 4107414, US 4186107, US 4226963, US 4347160, US 4472524, US 4522930, US 4530912, US 4532313, US 4657882, US 4581342, US 4657882.

The solid Ziegler-Natta catalyst component is desirably in the form of particles having generally an average particle size range of 3 to 200 μm, preferably 5 to 100 μm.

In one aspect of the present invention suitable polymerization catalysts comprise solid Ziegler-Natta catalyst components which preferably contain a titanium compound together with a magnesium halide compound acting as a support. Thus, the catalyst contains a titanium compound and optionally a Group 13 compound, for example an aluminium compound on a magnesium dihalide, like magnesium dichloride. Such catalysts are disclosed, for instance, in WO 2005/118655, EP 810235, WO2014/096296 and WO2016/097193.

One specific type of a solid Ziegler-Natta catalyst component is a solid $MgCl_2$ supported catalyst component comprising an internal organic compound of formula (I) or isomers or mixtures therefrom

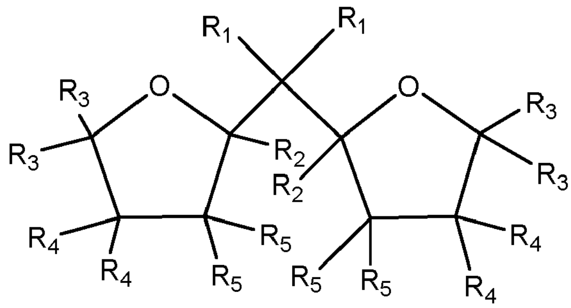

(I)

and wherein in the formula (I)

$R_1$ to $R_5$ are the same or different and can be hydrogen, a linear or branched $C_1$ to $C_8$-alkyl group, or a $C_3$-$C_8$-alkylene group, or two or more of $R_1$ to $R_5$ can form a ring,
the two oxygen-containing rings are individually saturated or partially unsaturated or unsaturated, and
R in the adduct $MgCl_2$*mROH is a linear or branched alkyl group with 1 to 12 C atoms, and m is 0 to 6.

Preferably, polymerization catalyst of said aspect further comprises a cocatalyst as described above. Especially

suitable is triethylaluminium (TEA).

Additionally, the polymerization catalyst of said aspect preferably comprises an external donor as described above. Especially suitable is dimethoxydimethylsilane (DMDS)

The solid Ziegler-Natta catalyst component as described above is especially suitable for the polymerization of the base resin comprising at least three fractions (A), (B) and (C) and optional fraction (P), when present, as described above or below.

In another aspect of the present invention suitable polymerization catalysts comprise solid Ziegler-Natta catalyst components which preferably contain a magnesium compound, an aluminium compound and a titanium compound supported on a particulate support.

The particulate support can be an inorganic oxide support, such as silica, alumina, titania, silica-alumina and silica-titania. Preferably, the support is silica or $MgCl_2$.

The average particle size ($D_{50}$) of the silica support can be typically from 10 to 100 μm. However, it has turned out that special advantages can be obtained if the support has an average particle size ($D_{50}$) from 5 to 50 μm, preferably from 5 to 25 μm.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794 or WO-A-99/51646. Alternatively, it can be prepared by first preparing a solution from the components and then contacting the solution with a carrier, as described in WO-A-01/55230.

Preferably, polymerization catalyst of said aspect further comprises a cocatalyst as described above. Especially suitable is diethylaluminium chloride (DEAC).

The solid Ziegler-Natta catalyst component as described above is especially suitable for the polymerization of the base resin comprising at least two fractions (A') and (B') as described above or below.

## Process details

The multistage process for producing a polyethylene composition according to the present invention preferably comprises the following steps:

a) polymerizing ethylene in the presence of a solid Ziegler-Natta catalyst component in a first reactor for obtaining a first intermediate material, the first intermediate material having a melt flow rate $MFR_2$ (190°C, 2.16 kg) of 5.0 to 300 g/10min,

b) transferring the first intermediate material to a second reactor

(i) feeding ethylene to the second reactor

(ii) further polymerizing the first intermediate material

for obtaining a second intermediate material, the second intermediate material having a melt flow rate $MFR_2$ (190°C, 2.16 kg) of 80 to 300 g/10min; and

c) transferring the second intermediate material to a third reactor

(i) feeding ethylene and comonomer selected from alpha-olefins having from 4 to 12 carbon atoms to the third reactor

(ii) further polymerizing the second intermediate material in the presence of a silane type external donor

for obtaining a base resin having density of from 950.0 kg/m$^3$ to 962.0 kg/m$^3$, determined according to ISO 1183, and

d) extruding the base resin into a polyethylene composition having a melt flow rate $MFR_{21}$ (190°C, 21.16 kg), of from 1.0 to 9.0 g/10 min, determined according to ISO 1133, and a viscosity at a constant shear stress of 747 Pa $eta_{747}$ of from 3500 kPa·s to 20000 kPa·s.

The first intermediate material preferably comprises fraction (A) as defined above or below. More preferably, the first intermediate material essentially consists of fraction (A) optionally together with unreacted monomers, solid Ziegler-Natta catalyst and optional unreacted chain transfer agent such as hydrogen.

The second intermediate material preferably comprises fractions (A) and (B) as defined above or below. More preferably, the second intermediate material essentially consists of fractions (A) and (B) optionally together with unreacted monomers, solid Ziegler-Natta catalyst and optional unreacted chain transfer agent such as hydrogen.

The base resin preferably comprises fractions (A), (B) and (C) as defined above or below. More preferably, the base resin essentially consists of fractions (A), (B) and (C).

In one embodiment the polymerization step a) can be preceded by an additional polymerization step p).

In optional polymerization step p) ethylene and optionally comonomer selected from alpha olefins having from 4 to 12 carbon atoms are polymerized in the presence of a solid Ziegler-Natta catalyst component in a pre-first reactor for obtaining a pre-first intermediate material. Said pre-first intermediate material is then transferred to the first reactor in order to polymerize the first intermediate material in process step a) as defined above.

The pre-first intermediate material preferably comprises fraction (P) as defined above or below. More preferably, the pre-first intermediate material essentially consists of fraction (P) optionally together with unreacted monomers, solid Ziegler-Natta catalyst and optional unreacted chain transfer agent such as hydrogen.

In the case of the presence of optional fraction (P), the first intermediate material preferably comprises fractions (P) and (A) as defined above or below. More preferably, the first intermediate material essentially consists of fractions (P) and (A) optionally together with unreacted monomers, solid Ziegler-Natta catalyst and optional unreacted chain transfer agent such as hydrogen.

Further, in said embodiment, the second intermediate material preferably comprises fractions (P), (A) and (B) as defined above or below. More preferably, the second intermediate material essentially consists of fractions (P), (A) and (B) optionally together with unreacted monomers, solid Ziegler-Natta catalyst and optional unreacted chain transfer agent such as hydrogen.

The base resin preferably comprises fractions (A), (B) and (C) and optional fraction (P), when present, as defined above or below. More preferably, the base resin essentially consists of fractions (A), (B) and (C) and optional fraction (P), when present.

The base resin and the polyethylene composition obtainable by the above described multistage process are preferably further defined by the properties of the base resin and the polyethylene composition described above or in claims.

The temperature in the optional pre-first reactor, preferably the optional pre-first slurry phase reactor, more preferably the optional pre-first loop reactor, is typically from 50 to 85 °C, preferably from 55 to 80 °C and in particular from 60 to 75 °C. The pressure is typically from 1 to 150 bar, preferably from 1 to 100 bar.

The temperature in the first reactor, preferably the first slurry phase reactor, more preferably the first loop reactor, is typically from 50 to 115 °C, preferably from 60 to 110 °C and in particular from 70 to 100 °C. The pressure is typically from 1 to 150 bar, preferably from 1 to 100 bar.

The temperature in the second reactor, preferably the second slurry phase reactor, more preferably the second loop reactor, is typically from 50 to 115 °C, preferably from 60 to 110 °C and in particular from 70 to 100 °C. The pressure is typically from 1 to 150 bar, preferably from 1 to 100 bar.

The optional pre-first reaction stage in principle may be conducted in any reactor. Preferably, the optional pre-first reactor is a slurry reactor. Since in the optional pre-first reaction stage only a small amount of ethylene polymer is polymerized suitably a small scale slurry reactor, such as a slurry reactor used for pre-polymerization steps is used.

The first and second reaction stage in principle may be conducted in any reactor. Preferably, both the first and second reactor are slurry reactors.

The slurry phase polymerization may be conducted in any known reactor used for slurry phase polymerization. Such reactors include a continuous stirred tank reactor and a loop reactor. It is especially preferred to conduct the polymerization in a loop reactor. In such reactors the slurry is circulated with a high velocity along a closed pipe by using a circulation pump. Loop reactors are generally known in the art and examples are given, for instance, in US-A-4,582,816, US-A-3,405,109, US-A-3,324,093, EP-A-479 186 and US-A-5,391,654.

It is sometimes advantageous to conduct the slurry phase polymerization above the critical temperature and pressure of the fluid mixture. Such operations are described in US-A-5,391,654. In such an operation the temperature is typically at least 85°C, preferably at least 90°C. Furthermore the temperature is typically not higher than 110°C, preferably not higher than 105°C. The pressure under these conditions is typically at least 40 bar, preferably at least 50 bar. Furthermore, the pressure is typically not higher than 150 bar, preferably not higher than 100 bar. In a preferred embodiment the slurry phase polymerization step, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

The slurry may be withdrawn from the slurry phase reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants the fluid which is withdrawn with the polymer evaporates in a flash tank and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages continuous withdrawal is often preferred.

The continuous withdrawal, on the other hand, has the problem that it typically withdraws the polymer in the same concentration as it is present within the reactor. To reduce the amount of hydrocarbons to be compressed the continuous outlet is advantageously combined with a suitable concentration device, such as a hydrocyclone or sieve, as disclosed in EP-A-1 415 999 and EP-A-1 591 460. The polymer-rich stream is then directed to a flash and the polymer-lean steam is returned directly into the reactor.

For adjusting the melt flow rate of the polyethylene fraction polymerized in the slurry phase reactor preferably hydrogen is introduced into the reactor.

Suitably, in the optional pre-first reaction stage no hydrogen or only small amounts of hydrogen are introduced into the optional pre-first slurry phase reactor. Due to the low hydrogen concentrations in the optional pre-first slurry phase reactor an ethylene polymer fraction with a low melt flow rate is obtained in the optional pre-first reaction stage.

The polyethylene fraction produced in the optional pre-first slurry phase reactor can be an ethylene homopolymer fraction or an ethylene copolymer fraction. It is preferred that the polyethylene fraction produced in the first slurry phase reactor is an ethylene homopolymer fraction.

If polymerizing a copolymer, comonomers preferably are selected from the group comprising 1-butene, 1-hexene, 4-methyl-1-pentene, 1-octene or their mixtures, especially preferred are 1-butene and 1-hexene, and mostly preferred 1-butene. In one embodiment in the optional pre-first slurry phase reactor an ethylene copolymer with 1-butene comonomers is polymerized so that 1-butene is fed to this reaction stage.

The residence time and the polymerization temperature in the optional pre-first slurry phase reactor are adjusted as such as to polymerize an ethylene homopolymer fraction or an ethylene copolymer fraction typically in an amount of 0.5 to 10 wt%, preferably 1.0 to 7.5 wt% and most preferably 1.5 to 5.0 wt% of the total base resin, if present.

Before directing the polymer slurry to the first loop reactor it can be subjected to a purging step for substantially removing hydrocarbons from the polymer slurry. It is however, preferred that the optional pre-first intermediate material is not subjected to a purging step.

The hydrogen feed in the first reaction stage is preferably adjusted to the ethylene feed in order to fulfil a hydrogen to ethylene ratio in the first slurry phase reactor of 300 to 750 mol/kmol, more preferably of 350 to 700 mol/kmol.

The polyethylene fraction produced in the first slurry phase reactor can be an ethylene homopolymer fraction or an ethylene copolymer fraction.

When in the optional pre-first reaction stage an ethylene copolymer is polymerized preferably unreacted comonomer from the first reaction stage is copolymerized in the first reaction stage to produce an ethylene copolymer.

It is preferred that no comonomer is introduced into the first slurry phase reactor.

The residence time and the polymerization temperature in the first slurry phase reactor are adjusted as such as to polymerize an ethylene homopolymer fraction typically in an amount of 5 to 40 wt%, preferably 10 to 35 wt% and most preferably 15 to 30 wt% of the total base resin.

Before directing the polymer slurry to the second slurry reactor it can be subjected to a purging step for substantially removing hydrocarbons from the polymer slurry. It is however, preferred that the first intermediate material is not subjected to a purging step.

The hydrogen feed in the second reaction stage is preferably adjusted to the ethylene feed in order to fulfil a hydrogen to ethylene ratio in the second slurry phase reactor of 250 to 700 mol/kmol, more preferably of 300 to 500 mol/kmol.

The polyethylene fraction produced in the second slurry phase reactor is an ethylene homopolymer fraction or an ethylene copolymer fraction.

If polymerizing a copolymer, comonomers preferably are selected from the group comprising 1-butene, 1-hexene, 4-methyl-1-pentene, 1-octene or their mixtures, especially preferred are 1-butene and 1-hexene, and mostly preferred 1-butene.

When in the optional pre-first reaction stage an ethylene copolymer is polymerized preferably unreacted comonomer from the optional pre-first and first reaction stage is copolymerized in the second reaction stage to produce an ethylene copolymer.

It is preferred that no comonomer is introduced into the second slurry phase reactor.

In still another embodiment in each of the optional pre-first, first and second slurry phase reactors an ethylene homopolymer is polymerized.

The residence time and the polymerization temperature in the second slurry phase reactor are adjusted as such as to polymerize an ethylene homopolymer fraction or an ethylene copolymer fraction typically in an amount of 10 to 50 wt%, preferably 15 to 47 wt% and most preferably 20 to 45 wt% of the total base resin.

Typically, the second intermediate material exiting the second slurry phase reactor comprises ethylene polymer which makes up to 35 to 70 wt%, preferably 40 to 65 wt% and most preferably 45 to 63 wt% of the total base resin.

Before directing the polymer slurry to the third reactor it can be subjected to a purging step for substantially removing hydrocarbons from the polymer slurry. The purging step is preferably conducted in a flash vessel operated at a pressure of 2 to 10 bar and a temperature of 50 to 100°C. After applying the purging step, the second intermediate material produced in the second slurry reactor preferably is transferred to a third reactor, preferably a gas phase reactor, more preferably a fluidized bed gas phase reactor.

In a fluidised bed gas phase reactor an olefin is polymerized in the presence of a polymerization catalyst in an upwards moving gas stream. The reactor typically contains a fluidised bed comprising the growing polymer particles containing the active catalyst located above a fluidisation grid.

The polymer bed is fluidised with the help of a fluidisation gas comprising the olefin monomer, eventually comonomer(s), eventually chain growth controllers or chain transfer agents, such as hydrogen, and eventually inert gas. The inert gas can thereby be the same or different as the inert gas used in the slurry phase reactor. The fluidisation gas is introduced into an inlet chamber at the bottom of the reactor. To make sure that the gas flow is uniformly distributed over the cross-sectional surface area of the inlet chamber the inlet pipe may be equipped with a flow dividing element as known in the art, e. g. US-A-4,933,149 and EP-A-684 871.

From the inlet chamber the gas flow is passed upwards through the fluidisation grid into the fluidised bed. The purpose of the fluidisation grid is to divide the gas flow evenly through the cross-sectional area of the bed. Sometimes the fluidisation grid may be arranged to establish a gas stream to sweep along the reactor walls, as disclosed in WO-A-2005/087261. Other types of fluidisation grids are disclosed, amongst others, in US-A-4,578,879, EP 600 414 and EP-A-721 798. An overview is given in Geldart and Bayens: The Design of Distributors for Gas-fluidised Beds, Powder Technology, Vol. 42, 1985.

The fluidisation gas passes through the fluidised bed. The superficial velocity of the fluidisation gas must be higher than the minimum fluidisation velocity of the particles contained in the fluidised bed, as otherwise no fluidisation would occur. On the other hand, the velocity of the gas should be lower than the onset velocity of pneumatic transport, as otherwise the whole bed would be entrained with the fluidisation gas. The minimum fluidisation velocity and the onset velocity of pneumatic transport can be calculated when the particle characteristics are known by using common engineering practice. An overview is given, amongst others, in Geldart: Gas Fluidisation Technology, J. Wiley & Sons, 1996. When the fluidisation gas is contacted with the bed containing the active catalyst the reactive components of the gas, such as monomers and chain transfer agents, react in the presence of the catalyst to produce the polymer product. At the same time the gas is heated by the reaction heat.

The unreacted fluidisation gas is then removed from the top of the reactor, compressed and recycled into the inlet chamber of the reactor. Prior to the entry into the reactor fresh reactants are introduced into the fluidisation gas stream to compensate for the losses caused by the reaction and product withdrawal. It is generally known to analyse the composition of the fluidisation gas and introduce the gas components to keep the composition constant. The actual composition is determined by the desired properties of the product and the catalyst used in the polymerization.

After that the gas is cooled in a heat exchanger to remove the reaction heat. The gas is cooled to a temperature which is lower than that of the bed to prevent the bed from being heated because of the reaction. It is possible to cool the gas to a temperature where a part of it condenses. When the liquid droplets enter the reaction zone they are vaporized. The vaporisation heat then contributes to the removal of the reaction heat. This kind of operation is called condensed mode and variations of it are disclosed, amongst others, in WO-A-2007/025640, US-A-4,543,399, EP-A-699 213, and WO-A-94/25495. It is also possible to add condensing agents into the recycle gas stream, as disclosed in EP-A-696 293. The condensing agents are non-polymerizable components, such as propane, n-pentane, isopentane, n-butane or isobutane, which are at least partially condensed in the cooler.

The polymeric product may be withdrawn from the gas phase reactor either continuously or intermittently. Combinations of these methods may also be used. Continuous withdrawal is disclosed, amongst others, in WO-A-00/29452. Intermittent withdrawal is disclosed, amongst others, in US-A-4,621,952, EP-A-188 125, EP-A-250 169 and EP-A-579 426.

The top part of the at least one gas phase reactor may include a so called disengagement zone. In such a zone

the diameter of the reactor is increased to reduce the gas velocity and allow the particles that are carried from the bed with the fluidisation gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed levels.

Also antistatic agent(s) may be introduced into the at least one gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes alcohols. The reactor may include a mechanical agitator to further facilitate mixing within the fluidised bed. An example of suitable agitator design is given in EP-A-707 513.

The temperature in the gas phase polymerization in the gas phase reactor typically is at least 70°C, preferably at least 80°C. The temperature typically is not more than 105°C, preferably not more than 95°C. The pressure is typically at least 10 bar, preferably at least 15 bar but typically not more than 30 bar, preferably not more than 25 bar.

For adjusting the melt flow rate of the polyethylene fraction polymerized in the first gas phase reactor hydrogen is introduced into the reactor.

The hydrogen feed is preferably adjusted to the ethylene feed in order to fulfil a hydrogen to ethylene ratio in the gas phase reactor of 0.01 to 10 mol/kmol, more preferably of 0.1 to 8.0 mol/kmol and most preferably 0.2 to 7.0 mol/kmol.

In the gas phase reactor preferably an ethylene copolymer fraction is produced. The fluidisation gas stream thus comprises comonomers preferably selected from the group consisting of alpha-olefin conomoners with 4 to 12 carbon atoms, more preferably 4 to 8 carbon atoms. Suitable alpha-olefin comonomer species are 1-butene, 1-hexene and 1-octene. 1-hexene are mostly preferred. The comonomer used in the first gas phase reactor may be the same or different to that used in the slurry phase reactor. The comonomer feed is preferably adjusted to the ethylene feed in order to fulfil a comonomer to ethylene ratio of at least 1.0 to 50 mol/kmol, more preferably 2.5 to 30 mol/kmol, most preferably 5.0 to 25 mol/kmol.

The residence time and the polymerization temperature in the gas phase reactor are adjusted as such as to polymerize an ethylene copolymer fraction typically in an amount of 30 to 65 wt%, preferably 35 to 60 wt% and most preferably 37 to 55 wt% of the total base resin. Further, the final base resin emerging from the gas phase reactor, preferably consisting of fractions (A), (B) and (C) and optional fraction (P), when present, preferably has a density of from 950.0 $kg/m^3$ to 962.0 $kg/m^3$. Preferably the density of the base resin is equal to or more than 950.5 $kg/m^3$ and equal to or less than 961.0 $kg/m^3$, more preferably of equal to or more than 951.0 $kg/m^3$ and equal to or less than 960.0 $kg/m^3$.

The solid Ziegler-Natta catalyst component can be fed to any polymerization stage but preferably is fed to the first polymerization stage or the pre-first polymerization stage, when present. Most preferably the solid Ziegler-Natta catalyst component is only fed to the first polymerization stage or the pre-first polymerization stage, when present. The catalyst may be transferred into the polymerization zone by any means known in the art. It is thus possible to suspend the catalyst in a diluent and maintain it as homogeneous slurry. Especially preferred is to use oil having a viscosity from 20 to 1500 mPa*s as diluent, as disclosed in WO-A-2006/063771. It is also possible to mix the catalyst with a viscous mixture of grease and oil and feed the resultant paste into the polymerization zone. Still further, it is possible to let the solid Ziegler-Natta catalyst component settle and introduce portions of thus obtained catalyst mud into the polymerization zone in a manner as disclosed, for instance, in EP-A- 428 054.

The external donor can be fed to any polymerization stage but preferably is fed to the third polymerization stage preferably conducted in the gas phase reactor. Most preferably the external donorcomponent is only fed to the third polymerization stage.

## Compounding

The polyethylene composition of the invention preferably is produced in a multi-stage process which further comprises a compounding step, wherein the base resin, which is typically obtained as a base resin powder from the reactor, is extruded in an extruder and then pelletized to polymer pellets in a manner known in the art to form the polyolefin composition of the invention.

Optionally, additives or other polymer components can be added to the composition during the compounding step in an amount as described above. Preferably, the composition of the invention obtained from the reactor is compounded in the extruder together with additives in a manner known in the art.

The extruder may be e.g. any conventionally used extruder. As an example of an extruder for the present compounding step may be those supplied by Japan Steel works, Kobe Steel or Farrel-Pomini, e.g. JSW 460P or JSW

CIM90P.

In one embodiment, the extrusion step is carried out using output rates of 25 kg/h to 500 kg/h, more preferably 35 kg/h to 300 kg/h. Preferably, the output is typically from 10 to 50 tons/h in commercial production.

The screw speed of the extruder is preferably 25 rpm to 550 rpm, more preferably 50 rpm to 500 rpm.

Preferably, in said extrusion step the SEI (specific energy input) of the extruder may be 100 kWh/ton to 250 kWh/ton, more preferably 120 kWh/ton to 230 kWh/ton, whereby the SEI is directly calculated from the electric input of the extruder ignoring the intrinsically limited effectiveness.

The extruder temperature before die plate in said extrusion step is preferably 180°C to 300°C, more preferably 200°C to 270°C.

Preferably the temperatures at the zones of an extruder having 4 zones are set as follows: Zone 1 is preferably set to 70 to 120°C. Zone 2 is preferably set to 140 to 200 °C. Zone 3 is preferably set to 160 to 260°C. Zone 4 is preferably set to 170 to 260 °C.

Pipe production

Polymeric pipes are generally manufactured by extrusion, or, to a small extent, by injection moulding. A conventional plant for extrusion of polymer pipes comprises an extruder, a die-head, a calibrating device, cooling equipment, a pulling device, and a device for cutting and/or for coiling up the pipe.

The manufacture of polyethylene materials for use in pressure pipes is discussed in an article by Scheirs et al (Scheirs, Böhm, Boot and Leevers: PE100 Resins for Pipe Applications, TRIP Vol. 4, No. 12 (1996) pp. 408-415). The authors discuss the production technology and properties of PE100 pipe materials. They point out the importance of proper comonomer distribution and molecular weight distribution in order to optimize slow crack growth and rapid crack propagation.

**Use**

The present invention further relates to the use of the polyethylene composition as defined above or below for the production of an article such as a pipe or a pipe fitting as described above or below.

**Examples:**

**1. Definitions**

*a) Melt Flow Rate*

The melt flow rate (MFR) is determined according to IS0 1133 and is indicated in g/10 min. The MFR is an indication of the flowability, and hence the processability, of the polymer. The higher the melt flow rate, the lower the viscosity of the polymer. The $MFR_5$ of polyethylene is measured at a temperature of 190 °C and a load of 5 kg, the $MFR_2$ of polyethylene at a temperature of 190 °C and a load of 2.16 kg and the $MFR_{21}$ of polyethylene is measured at a temperature of 190 °C and a load of 21.6 kg. The quantity FRR (flow rate ratio) denotes the ratio of flow rates at different loads. Thus, $FRR_{21/5}$ denotes the value of $MFR_{21}/MFR_5$.

*b) Density*

Density of the polymer was measured according to IS0 1183-1:2004 Method A on compression moulded specimen prepared according to EN IS0 1872-2 (Feb 2007) and is given in kg/m$^3$.

*c) Comonomer content*

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$, respectively. All spectra were recorded using a $^{13}C$ optimized 7 mm magic-angle spinning (MAS) probehead at 150 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {[1], [2], [6]}. Standard single-pulse excitation was employed utilizing the transient NOE at short recycle delays of 3 s {[1], [3]) and the RSHEPT decoupling scheme {[4], [5]}. A total of 16384 transients were acquired per spectrum. This setup was chosen due to its high sensitivity towards low comonomer contents.

Quantitative $^{13}C\{^1H)$ NMR spectra were processed, integrated and quantitative properties determined using

custom spectral analysis automation programs. All chemical shifts are internally referenced to the bulk methylene signal (δ+) at 30.00 ppm {[7]}.

Characteristic signals resulting from isolated 1-hexene incorporation i.e. EEHEE comonomer sequences, were observed {[7]}. Isolated 1-hexene incorporation was quantified using the integral of the signal at 38.3 ppm assigned to the *B4 sites, accounting for the number of reporting sites per comonomer:

$$H = I_{*B4}$$

With no other signals indicative of other comonomer sequences, i.e. consecutive comonomer incorporation, observed the total 1-hexene comonomer content was calculated based solely on the amount of isolated 1-hexene sequences:

$$H_{total} = H$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*(I_{2S} + I_{3S})$$

The relative content of ethylene was quantified using the integral of the bulk methylene (δ+) signals at 30.0 ppm:

$$E = (1/2)*I_{\delta+}$$

The total ethylene comonomer content was calculated based on the bulk methylene signals and accounting for ethylene units present in other observed comonomer sequences or end-groups:

$$E_{total} = E + (5/2)*B + (3/2)*S$$

The total mole fraction of 1-hexene in the polymer was then calculated as:

$$fH = ( H_{total} / ( E_{total} + H_{total} )$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * (fH * 84.16) / ( (fH * 84.16) + ((1-fH) * 28.05) )$$

[1] Klimke, K., Parkinson, M., Piel, C., Kaminsky, W., Spiess, H.W., Wilhelm, M., Macromol. Chem. Phys. 2006; 207:382.

[2] Parkinson, M., Klimke, K., Spiess, H.W., Wilhelm, M., Macromol. Chem. Phys. 2007; 208:2128.

[3] Pollard, M., Klimke, K., Graf, R., Spiess, H.W., Wilhelm, M., Sperber, O., Piel, C., Kaminsky, W., Macromolecules 2004; 37:813.

[4] Filip, X., Tripon, C., Filip, C., J. Mag. Reson. 2005, 176, 239.

[5] Griffin, J.M., Tripon, C., Samoson, A., Filip, C., and Brown, S.P., Mag. Res. in Chem. 2007, 45, S1, S198.

[6] Castignolles, P., Graf, R., Parkinson, M., Wilhelm, M., Gaborieau, M., Polymer 50 (2009) 2373.
[7] J. Randall, Macromol. Sci., Rev. Macromol. Chem. Phys. 1989, C29, 201.

*d) Rheological parameters*

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \quad (1)$$

If the applied strain is within the linear viscoelastic regime, the resulting sinusoidal stress response can be given by

$$\sigma(t) = \sigma_0 \sin(\omega t + \delta) \quad (2)$$

where $\sigma_0$, and $\gamma_0$ are the stress and strain amplitudes, respectively; $\omega$ is the angular frequency; $\delta$ is the phase shift (loss angle between applied strain and stress response); t is the time. Dynamic test results are typically expressed by means of several different rheological functions, namely the shear storage modulus, G', the shear loss modulus, G", the complex shear modulus, G*, the complex shear viscosity, $\eta^*$, the dynamic shear viscosity, $\eta'$, the out-of-phase component of the complex shear viscosity, $\eta''$ and the loss tangent, tan $\eta$, which can be expressed as follows:

$$G' = \frac{\sigma_0}{\gamma_0} \cos\delta \text{ [Pa]} \quad (3)$$

$$G'' = \frac{\sigma_0}{\gamma_0} \sin\delta \text{ [Pa]} \quad (4)$$

$$G^* = G' + iG'' \text{ [Pa]} \quad (5)$$

$$\eta^* = \eta' - i\eta'' \text{ [Pa·s]} \quad (6)$$

$$\eta' = \frac{G''}{\omega} \text{ [Pa·s]} \quad (7)$$

$$\eta'' = \frac{G'}{\omega} \text{ [Pa·s]} \quad (8)$$

The determination of so-called Shear Thinning Index, which correlates with MWD and is independent of Mw, is done as described in equation 9.

$$SHI_{(x/y)} = \frac{\text{Eta* for (G* = x kPa)}}{\text{Eta* for (G* = y kPa)}} \quad (9)$$

For example, the $SHI_{(2.7/210)}$ is defined by the value of the complex viscosity, in

Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity ($\eta^*$) were obtained as a function of frequency ($\omega$).

Thereby, e.g. $\eta^*_{300rad/s}$ ($eta^*_{300rad/s}$) is used as abbreviation for the complex viscosity at the frequency of 300 rad/s and $\eta^*_{0.05rad/s}$ ($eta^*_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s. The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index *EI(x)*. The elasticity index *Ei(x)* is the value of the storage modulus, G' determined for a value of the loss modulus, G" of x kPa and can be described by equation 10.

$$EI(x) = G'\ for\ \ (G'' = x\ kPa)\ [\text{Pa}] \qquad (10)$$

For example, the EI(5kPa) is the defined by the value of the storage modulus G', determined for a value of G" equal to 5 kPa.

The polydispersity index, *PI*, is defined by equation 11.

$$PI = \frac{10^5}{G'(\omega_{COP})}, \qquad \omega_{COP} = \omega \text{ for } (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.

[2] "The influence of molecular structure on some rheological properties of polyethylene", Heino, E.L., Borealis Polymers Oy, Porvoo, Finland, Annual Transactions of the Nordic Rheology Society, 1995.

[3] "Definition of terms relating to the non-ultimate mechanical properties of polymers", Pure & Appl. Chem., Vol. 70, No. 3, pp. 701-754, 1998.

*e)* Viscosity $eta_{747}$

One method which correlates well with the sagging properties, and is used in connection with the present invention relates to the rheology of the polymer and is based on determination of the viscosity of the polymer at a very low, constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow.

The determination of the viscosity at 747 Pa shear stress is made by using a rotational rheometer, which can be a constant stress rheometer as for example an Anton Paar MCR Series Rheometer. The measurements are performed under a constant shear stress between two 25 mm diameter plates (constant rotation direction). The gap between the plates is 1.2 mm. A 1.2 mm thick polymer sample is inserted between the plates.

The sample is temperature conditioned during 2 min before the measurement is started. The measurement is performed at 190 °C. After temperature conditioning the measurement starts by applying the predetermined stress. The

stress is maintained during 1800 s to let the system approach steady state conditions. After this time the measurement starts and the viscosity is calculated.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

*f) Molecular weight*

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i / M_i)} \qquad (1)$$

$$M_w = \frac{\sum_{i=1}^{N} (A_i x\, M_i)}{\sum_{i=1}^{N} A_i} \qquad (2)$$

$$M_z = \frac{\sum_{i=1}^{N} (A_i\, x\, M_i^2)}{\sum_{i=1}^{N} (A_i x M_i)} \qquad (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3}\ mL/g, \qquad \alpha_{PS} = 0.655$$

$$K_{PE} = 39 \times 10^{-3}\ mL/g, \qquad \alpha_{PE} = 0.725$$

A third order polynomial fit was used to fit the calibration data.

All samples were prepared in the concentration range of around 0,1 mg/ml and dissolved at 160 °C for 6 hours for PE in fresh distilled TCB stabilized with 1000 ppm Irgafos168 under continuous gentle shaking.

*g) Tensile modulus and tensile properties*

As a measure for stiffness, the tensile modulus (E-modulus) of the compositions was measured at 23°C on compression molded specimens according to ISO 527-2:1993. The specimens (1A type) were cut from plaques of 4 mm thickness prepared by compression molding according to ISO 293:2004 using the conditions defined in chapter 3.3 of ISO 1872-2:2007. The modulus was measured at a speed of 1 mm/min.

The tensile strain at break (in %) was determined on the same samples according to ISO 527-1. The measurement was conducted at 23°C with an elongation rate (cross head speed) of 50 mm/min.

*h) Charpy notched impact strength*

Charpy impact strength was determined according to ISO179/1eA:2000 on V-notched samples of 80*10*4 $mm^3$ at 0 °C (Charpy impact strength (0 °C)) and at -20°C (Charpy impact strength (-20 °C)). Samples were cut from plaques of 4 mm thickness prepared by compression molding according to ISO 293:2004 using the conditions defined in chapter 3.3 of ISO 1872-2:2007.

*i) Measure of homogeneityl White spot rating (WSR)*

The white spot rating of the compounded composition is determined according to ISO 18 553/2002-03-01 as follows:
Pellets of the composition which are obtained after a single compounding step are analysed by collecting 6 different pellets where from each pellet, one cut is used (thickness cut 10 μm). The single compounding step is conducted using a twin screw extruder at an extruder temperature before die plate of not more than 300°C and a specific energy input SEI of not more than 350 kWh/ton. In the example section the compounding conditions for the single compounding step are listed in Table 2.

The cut for the measurement of the white spot rating should be taken near the middle of the pellet (sample) with rotation microtome Type Leica RM2265. Preferably, the cut is in flow direction of the melt through the whole of the pelletizer.

The cuts are evaluated at a magnification of 100x and the size and the number of the non-coloured inclusions ("white-spots" = non-pigmented, high molecular weight agglomerates/particles in the polymer) on the total area of each cut are determined. All white spots with a diameter of> 5 μm are counted. Transmission light microscope Olympus BX41 with XYZ motorised stage from Märzhäuser and particle inspector Software from Olympus was used.

The white spot rating test "homogeneity" is based on the ISO 18553/2002-03-01. In this test, inhomogeneities of the composition, present after a single compounding step as described above, which appear as white spots, are determined and rated according to the rating scheme given in ISO 18553/2002-03-01. The rating scheme given in ISO 18553/2002-03-01 ends at a white spot rating value of 7.0. For higher ratings an internal extrapolation of said rating scheme was used as listed in the table below:

Extrapolation of rating scheme given in ISO18553/2002-03-01

| Note | 101-110 | 111-120 | 121-130 | 131-140 | 141-150 | 151-160 | 161-170 | 171-180 | 181-190 | 191-200 | 201-210 | 211-220 | 221-230 | 231-240 | 241-250 | 251-260 | 261-270 | 271-280 | 281-290 | 291-300 | 301-310 | 311-320 | 321-330 | 331-340 |
|---|---|---|---|---|---|---|---|---|---|---|---|---|---|---|---|---|---|---|---|---|---|---|---|---|
| 7.0 | 12 | 6 | 3 | 1 | | | | | | | | | | | | | | | | | | | | |
| 7.5 | | 12 | 6 | 3 | 1 | | | | | | | | | | | | | | | | | | | |
| 8.0 | | | 12 | 6 | 3 | 1 | | | | | | | | | | | | | | | | | | |
| 8.5 | | | | 12 | 6 | 3 | 1 | | | | | | | | | | | | | | | | | |
| 9.0 | | | | | 12 | 6 | 3 | 1 | | | | | | | | | | | | | | | | |
| 9.5 | | | | | | 12 | 6 | 3 | 1 | | | | | | | | | | | | | | | |
| 10.0 | | | | | | | 12 | 6 | 3 | 1 | | | | | | | | | | | | | | |
| 10.5 | | | | | | | | 12 | 6 | 3 | 1 | | | | | | | | | | | | | |
| 11.0 | | | | | | | | | 12 | 6 | 3 | 1 | | | | | | | | | | | | |
| 11.5 | | | | | | | | | | 12 | 6 | 3 | 1 | | | | | | | | | | | |
| 12.0 | | | | | | | | | | | 12 | 6 | 3 | 1 | | | | | | | | | | |
| 12.5 | | | | | | | | | | | | 12 | 6 | 3 | 1 | | | | | | | | | |
| 13.0 | | | | | | | | | | | | | 12 | 6 | 3 | 1 | | | | | | | | |
| 13.5 | | | | | | | | | | | | | | 12 | 6 | 3 | 1 | | | | | | | |
| 14.0 | | | | | | | | | | | | | | | 12 | 6 | 3 | 1 | | | | | | |
| 14.5 | | | | | | | | | | | | | | | | 12 | 6 | 3 | 1 | | | | | |
| 15.0 | | | | | | | | | | | | | | | | | 12 | 6 | 3 | 1 | | | | |
| 15.5 | | | | | | | | | | | | | | | | | | 12 | 6 | 3 | 1 | | | |
| 16.0 | | | | | | | | | | | | | | | | | | | 12 | 6 | 3 | 1 | | |
| 16.5 | | | | | | | | | | | | | | | | | | | | 12 | 6 | 3 | 1 | |
| 17.0 | | | | | | | | | | | | | | | | | | | | | 12 | 6 | 3 | 1 |

This table is cut at white spot ratings of 17.0 as obtained in the example section but can further be extrapolated accordingly for higher white spot ratings.

*j) Pressure test on un-notched pipes (PT); resistance to internal pressure*

The resistance to internal pressure has been determined in a pressure test on pressure test on un-notched 32 mm SDR 11 pipes having a length of 450 mm is carried out in water-inside and water-outside environment according to ISO 1167-1:2006. End caps of type A were used. The time to failure is determined in hours. Hoop stresses of 12.0 MPa, 12.9 MPa, 13.4 MPa, 13.6 MPa and 13.9 MPa, each tested at a temperature of 20°C were applied.

*k) Frequency sweep measurements for determining RSI*

Dynamic oscillatory shear experiments were conducted with an Anton Paar rheometer model: MCR 501A using ISO standard 6721-1 & 10 methods. Frequency sweep experiments at 190°C and 25 mm parallel plate mode were run under nitrogen from 0.1 to 100 sec-1. Samples are typically 1.3 mm thick with care taken to ensure that the samples completely fill the gap between the upper and lower platens. Discrete relaxation spectra were calculated with the commercially available RSI TA software Oschestrator™ software package.

The numbers of relaxation modes calculated for the samples reported were typically 2 (N=2; i.e. the number of relaxation times per decade) with non-linear method.

First moment of the relaxation spectrum- $\lambda_I$

The determination of the discrete relaxation time spectrum from the storage and loss modulus data (G', G" (ω)) was done by the use of IRIS Rheo Hub 2008. The linear viscoelastic data (G', G" (ω)) was obtained by frequency sweep measurements undertaken at 190°C, on a Anton Paar MCR 501 coupled with 25 mm parallel plates, applying a gap of 1.3 mm and a strain within linear viscoelastic regime. The underlying calculation principles used for the determination of the discrete relaxation spectrum are described elsewhere [1].

IRIS RheoHub 2008 expresses the relaxation time spectrum as a sum of N Maxwell modes

$$\overset{o}{G}(t) = G_e . \sum_{1}^{N} g_i . e^{-\frac{t}{\lambda_i}}$$

wherein $g_i$ *and* $\lambda_i$ are material parameters and $G_e$ is the equilibrium modulus.

The choice for the maximum number of modes, *N* used for determination of the discrete relaxation spectrum, was done by using the option "optimum" from IRIS RheoHub 2008. The equilibrium modulus $G_e$ was set at zero.

The so-called first moment of the relaxation spectrum $\lambda_I$ can be described according to reference [2] as:

$$\lambda_I = \frac{\eta_0}{G_N^0} \qquad [s]$$

in which, $\eta_0$ are $G_N^0$ values are taken from the "Rheological Constants" table retrieved by IRIS RheoHub 2008, after calculation of the relaxation spectra, using the procedure described above.

References:

1. Baumgärtel M, Winter HH, "Determination of the discrete relaxation and retardation time spectra from dynamic mechanical data", Rheol Acta 28:511519 (1989).
2. Structure and Rheology of Molten Polymers, John Dealy & Ronald G. Larson, Hanser 2006, pp 119.

The cRSI refers to the RSI correlated by the molecular weight distribution Mw/Mn and the melt flow rate $MFR_5$. The cRSI is calculated according to cRSI = Mw/Mn · $MFR_5$ · RSI

## 2. Materials

*a) Preparation of the solid Ziegler-Natta catalyst component 1 (ZN1)*

The solid Ziegler-Natta catalyst component 1 (ZN1) was prepared according to Reference example 2 of WO 2016/124676 A1.

*b) Preparation of the solid Ziegler-Natta catalyst component 2 (ZN2)*

The solid Ziegler-Natta catalyst component 1 (ZN1) was prepared according to Reference example 1 of WO 2016/124676 A1.

*c) Multi-stage polymerization for inventive example IE1*

A pre-first loop reactor having a volume of 50 $dm^3$ was operated at 70 °C and 58.8 bar pressure. For producing a pre-first polymer fraction 2 kg/h ethylene, 0.06 kg/h 1-butene and 2 g/h of hydrogen. Unreacted 1-butene was transferred to the following polymerization stages until it was removed in the flash vessel. In addition, the solid Ziegler-Natta catalyst component 1 (ZN1) prepared according to the description above was introduced into the reactor at a rate of 11 g/h and triethylaluminium (TEA) cocatalyst was introduced into the reactor at a rate of 22 g/h. The conditions in the reactor as shown in Table 1.

The polymer slurry was withdrawn from the pre-first loop reactor and transferred into a loop reactor having a volume of 150 $dm^3$. This first loop reactor was operated at 95°C and 55.7 bar pressure. Into the reactor were introduced ethylene and hydrogen so that the ratio of hydrogen to ethylene (H2/C2) in the reactor was 632 mol/kmol. No additional catalyst feed or comonomer feed was introduced into the reactor. The conditions in the reactor as shown in Table 1.

The polymer slurry was withdrawn from the first loop reactor and transferred into a further loop reactor having a volume of 350 $dm^3$. This second loop reactor was operated at 95°C and 50.9 bar pressure. Into the reactor were introduced ethylene and hydrogen so that the ratio of hydrogen to ethylene (H2/C2) in the reactor was 461 mol/kmol. No additional catalyst feed or comonomer feed was introduced into the reactor. The conditions in the reactor as shown in Table 1.

The polymer slurry was withdrawn from the second loop reactor and transferred into a flash vessel operated at 3 bar pressure and 70 °C temperature where the hydrocarbons were substantially removed from the polymer. The polymer was then introduced into a gas phase reactor operated at a temperature of 85°C and a pressure of 20.1 bar. In addition ethylene, 1-hexene and hydrogen were introduced into the reactor so that the ratio of hydrogen to ethylene (H2/C2) in the reactor was 2.3 mol/kmol and the ratio of 1-hexene to ethylene (C6/C2) in the reactor was 7.3 mol/kmol. Additionally dimethoxydimethylsilane was introduced into the reactor as external donor at a feed rate of 3.58 g/h. The conditions are shown in Table 1.

The resulting polymer was purged with nitrogen (about 50 kg/h) for one hour, stabilised with 2200 ppm of Irganox B225 and 1500 ppm Ca-stearate and then extruded together with 5.75 wt% carbon black masterbatch that leads to 2.3 wt% carbon black in the final polymer composition to pellets in a counter-rotating twin screw extruder CIM90P (manufactured by Japan Steel Works) so that the throughput was 223 kg/h and the screw speed was 323 rpm.

*d) Multi-stage polymerization for inventive examples IE2 to IE5*

Inventive examples IE2 to IE5 were polymerized using the same solid Ziegler-Natta catalyst component and external donor and the same reactor configuration as inventive example IE1. The polymerization conditions and feeds to the different reactors are shown in Table 1.

*e) Comparative Example CE1*

Comparative example CE1 was polymerized according to example C (denoted as example °) of WO 00/22040 with the exception that the melt flow rate $MFR_2$ of the ethylene homopolmyer fraction polymerized in the loop reactor has been adjusted to 325 g/10 min and the split of the ethylene copolymer polymerized in the gas phase reactor has been adjusted to 50 wt%.

*f) Comparative example CE2*

Comparative example CE2 was polymerized using the same reactor configuration as described for the inventive examples IE1 to IE5. As catalyst the solid Ziegler-Natta catalyst component 2 (ZN2) as described above was used. Into

the first loop reactor only the solid Ziegler-Natta catalyst component 2 (ZN2) was fed. Ethylene, hydrogen and trithylaluminium as cocatalyst were fed into the second loop reactor. The polymerization conditions and feeds to the different reactors are shown in Table 1.

Table 1: Polymerization conditions of IE1-IE5 and CE2

| | IE1 | IE2 | IE3 | IE4 | IE5 | CE2 |
|---|---|---|---|---|---|---|
| **Pre-First loop reactor:** | | | | | | |
| Temperature [°C] | 70 | 70 | 70 | 60 | 60 | |
| Pressure [bar] | 58.8 | 58.6 | 59.1 | 57.1 | 57.8 | |
| Catalyst feed [g/h] | 11 | 11 | 10 | 15 | 9 | 5 |
| Cocatalyst feed [g/h] | 22 | 22 | 22 | 16 | 11 | |
| Al/Ti ratio [mol/mol] | 13.5 | 13.7 | 15.4 | 14.53 | 15.93 | 16 |
| $C_2$ feed [kg/h] | 2.0 | 2.0 | 2.0 | 4 | 4 | |
| $C_4$ feed [g/h] | 60.3 | 59.7 | 59.7 | 50.0 | 50.0 | |
| $H_2$ feed [g/h] | 2 | 2 | 2 | 2 | 2 | |
| Production rate [kg/h] | 1.9 | 1.9 | 1.9 | 3 | 3 | |
| Split [wt%] | 2.4 | 2.5 | 2.4 | 3.0 | 3.0 | 0 |
| **First loop reactor** | | | | | | |
| Temperature [°C] | 95 | 95 | 95 | 95 | 95 | 95 |
| Pressure [bar] | 55.7 | 55.8 | 55.8 | 55.9 | 55.9 | 59.9 |
| $H_2/C_2$ [mol/kmol] | 632 | 601 | 525 | 437 | 432 | 503 |
| $C_4/C_2$ [mol/kmol] | 5.0 | 5.2 | 5.0 | 3.8 | 3.5 | 0 |
| $C_2$ concentration [mol%] | 4.3 | 4.0 | 4.7 | 4.8 | 4.8 | 3.8 |
| Cocatalyst feed [g/h] | 0 | 0 | 0 | 16 | 10 | 3.4 |
| Al/Ti ratio [mol/mol] | 13.5 | 13.7 | 15.4 | | | 7.9 |
| Production rate [kg/h] | 15.2 | 15.2 | 17.1 | 14.9 | 17.4 | 22.2 |
| Split [wt%] | 21.2 | 21.1 | 22.0 | 17.2 | 20.1 | 27.9 |
| $MFR_2$ [g/10 min] | 89 | 112 | 139 | 40 | 7 | 516 |
| **Second loop reactor** | | | | | | |
| Temperature [°C] | 95 | 95 | 95 | 95 | 95 | 95 |
| Pressure [bar] | 50.9 | 50.9 | 50.9 | 53.5 | 53.5 | 54.4 |
| $H_2/C_2$ [mol/kmol] | 461 | 427 | 381 | 421 | 437 | 440 |
| $C_4/C_2$ [mol/kmol] | 1.6 | 1.5 | 1.7 | 2.0 | 2.0 | 0 |
| $C_2$ concentration [mol%] | 4.7 | 4.8 | 5.1 | 4.1 | 4.0 | 3.5 |
| Cocatalyst feed [g/h] | 0 | 0 | 0 | 0 | 0 | 3.4 |
| Production rate [kg/h] | 28.7 | 29.2 | 29.3 | 34.2 | 31.9 | 23.1 |
| Split [wt%] | 36.6 | 37.6 | 37.8 | 39.8 | 36.9 | 29.1 |
| $MFR_2$ [g/10 min] | 170 | 188 | 110 | 240 | 187 | 384 |
| **Gas phase reactor:** | | | | | | |
| Temperature [°C] | 85 | 85 | 85 | 85 | 85 | 85 |
| Pressure [bar] | 20.1 | 20.1 | 20.1 | 20.0 | 20.0 | 20.0 |

(continued)

| Gas phase reactor: | | | | | | |
|---|---|---|---|---|---|---|
| $H_2/C_2$ [mol/kmol] | 2.3 | 2.2 | 2.2 | 3.7 | 4.3 | 1.4 |
| $C_6/C_2$ [mol/kmol] | 7.3 | 7.0 | 7.6 | 10.8 | 21.3 | 48.1 |
| $C_2$ concentration [mol%] | 12.5 | 13.0 | 13.0 | 11.8 | 11.6 | 24.8 |
| external donor feed [g/h] | 3.6 | 3.6 | 3.4 | 5.2 | 4.1 | 0.9 |
| Production rate [kg/h] | 32.1 | 30.5 | 29.9 | 34.2 | 34.3 | 42.2 |
| Split [wt%] | 41.5 | 40.1 | 38.2 | 39.7 | 39.7 | 43.0 |
| $MFR_5$ [g/10 min] | 0.05 | 0.07 | 0.11 | 0.07 | 0.08 | 0.07 |
| $MFR_{21}$ [g/10 min] | 3.6 | 4.5 | 8.1 | 8.4 | 7.0 | 4.6 |
| Density [kg/m$^3$] | 952.5 | 954.1 | 954.9 | 954.9 | 952.0 | 954.1 |

*g) Preparation of polyethylene compositions of examples IE1-IE7 and CE1-CE5*

The resulting polymer was purged with nitrogen (about 50 kg/h) for one hour, stabilised with 2200 ppm of Irganox B225 and 1500 ppm Ca-stearate and then extruded together with 5.75 wt% carbon black masterbatch that contains 40 wt% carbon black, leading to 2.3 wt% carbon black in the final composition, to pellets in a counter-rotating twin screw extruder CIM90P (manufactured by Japan Steel Works) for IE1-IE5, in a co-rotating twin screw extruder W&P ZSK 40 (manufactured by Coperion) for CE2. The compounding conditions are listed in Table 2.

Table 2: Compounding conditions

| | IE1 | IE2 | IE3 | IE4 | IE5 | CE2 |
|---|---|---|---|---|---|---|
| Feed [kg/h] | 223 | 227 | 227.3 | 201.65 | 201.92 | 36.24 |
| Screw speed [rpm] | 323 | 330 | 329.9 | 449.18 | 449.52 | 120 |
| SEI [kWh/ton] | 218 | 219 | 219.3 | 212.74 | 210.56 | 260 |
| Melt temperature [°C] | 258.5 | 255.3 | 255.3 | 235.49 | 236.13 | 237 |
| Zone 1 temperature [°C] | 100 | 100 | 99.6 | 99.78 | 99.68 | 190 |
| Zone 2 temperature [°C] | 186 | 184 | 184 | 153.59 | 144.86 | 230 |
| Zone 3 temperature [°C] | 259 | 259 | 259 | 213.31 | 206.76 | 230 |
| Zone 4 temperature [°C] | 250 | 250 | 249.7 | 181.19 | 179.43 | 230 |
| Zone 5 temperature [°C]* | | | | | | 230 |
| Zone 6 temperature [°C]* | | | | | | 230 |
| Zone 7 temperature [°C]* | | | | | | 230 |
| Zone 8 temperature [°C]* | | | | | | 230 |
| Zone 9 temperature [°C]* | | | | | | 230 |
| Zone 10 temperature [°C]* | | | | | | 230 |
| *: only for CE2 | | | | | | |

The properties of the compounded compositions are shown in Table 3.

Several compositions were extruded as pipes. The extrusion conditions and the properties of the pipes are shown in Table 4.

Table 3: Properties of the polyethylene compositions of examples IE1-IE5 and CE1-CE2

| | IE1 | IE2 | IE3 | IE4 | IE5 | CE1 | CE2 |
|---|---|---|---|---|---|---|---|
| $C_6$-content [mol%] | 0.08 | 0.08 | 0.06 | 0.15 | 0.25 | 0.6 | 0.3 |
| $MFR_5$ [g/10 min] | 0.04 | 0.05 | 0.05 | 0.03 | 0.10 | 0.25 | 0.11 |
| $MFR_{21}$ [g/10 min] | 2.9 | 2.8 | 4.6 | 3.6 | 4.2 | 9.7 | 9.7 |
| Density [kg/m$^3$] | 966.8 | 968.2 | 966.7 | 968.3 | 962.6 | 960 | 964.3 |
| $eta_{747}$ [kPa·s] | 7622 | 9508 | 9720 | 10659 | 8270 | 479 | 3959 |
| PI [Pa$^{-1}$] | 2.8 | 3.1 | 5.0 | 4.1 | 3.6 | 3.6 | 6.2 |
| $eta_{0.05}$ [kPa·s] | 1185 | 1424 | 1039 | 1153 | 1243 | 168 | 528 |
| $eta_{300}$ [Pa·s] | 1753 | 1710 | 1190 | 1318 | 1606 | 1072 | 982 |
| Mn [kg/mol] | 9.3 | 8.6 | 8.5 | 7.3 | 8.1 | 8.0 | 9.4 |
| Mw [kg/mol] | 443 | 497 | 490 | 558 | 525 | 234 | 407 |
| Mz [kg/mol] | 2143 | 2410 | 2545 | 2805 | 2660 | 1390 | 2500 |
| Mw/Mn | 47.6 | 57.8 | 57.5 | 76.6 | 64.6 | 29.3 | 43.1 |
| Tensile modulus [MPa] | 1184 | 1205 | 1210 | 1241 | 1206 | 1297 | 1284 |
| Strain at break [%] | 589 | 573 | 561 | 520 | 495 | 593 | 592 |
| Stress at break [MPa] | 30.6 | 29.7 | 26.2 | 21.9 | 22.4 | 28.1 | 30.4 |
| Yield strain [%] | 8.9 | 8.5 | 8.4 | 9.1 | 9.3 | 8.3 | 8.3 |
| Yield stress [MPa] | 27.8 | 28.1 | 28.4 | 26.7 | 25.8 | 27.6 | 27.2 |
| Charpy NIS, 0°C [kJ/m$^2$] | 57.8 | 55.5 | 43 | 28.4 | 35.7 | 26.3 | |
| Charpy NIS, -20°C [kJ/m$^2$] | 44.8 | 46.2 | 33.5 | 20.6 | 22.8 | 12.9 | |
| WSR | 17 | 17 | 18 | | | 7 | 9.2 |
| RSI | 1271 | 1581 | 1837 | 1660 | 1485 | 243 | 1039 |
| cRSI | 2420 | 4569 | 5281 | 3815 | 9593 | 1780 | 4926 |
| n.d. = not detectable | | | | | | | |

Table 4: Pipe extrusion conditions and pipe properties of the polyethylene compositions of examples IE1-IE5 and CE1-CE2

| | IE1 | IE2 | IE3 | IE4 | IE5 | CE1 | CE2 |
|---|---|---|---|---|---|---|---|
| **Pipe extrusion** | | | | | | | |
| Adaptor temperature [°C] | 200 | 200 | 200 | 200 | 200 | 200 | 200 |
| Zone 1 temperature [°C] | 220 | 220 | 220 | 220 | 220 | 220 | 225 |
| Zone 2 temperature [°C] | 215 | 215 | 215 | 215 | 215 | 215 | 220 |
| Zone 3 temperature [°C] | 210 | 210 | 210 | 210 | 210 | 210 | 215 |
| Zone 4 temperature [°C] | 210 | 210 | 210 | 210 | 210 | 210 | 210 |

(continued)

| | IE1 | IE2 | IE3 | IE4 | IE5 | CE1 | CE2 |
|---|---|---|---|---|---|---|---|
| **Pipe extrusion** | | | | | | | |
| Zone 5 temperature [°C] | 200 | 200 | 200 | 200 | 200 | 200 | 210 |
| Melt pressure [bar] | 248 | 236 | 190 | 198 | 224 | 200 | 175 |
| Melt temperature [°C] | 207 | 209 | 211 | 213 | 213 | 220 | 219 |
| SEI [kWh/t] | 148 | 146 | 139 | 158 | 168 | 175 | |
| Output [kg/hr] | 50 | 50 | 50 | 50 | 50 | 50 | 50 |
| Screw speed [rpm] | 57.7 | 57.8 | 57.3 | 65.3 | 58.8 | 50.0 | 55.2 |
| **Pressure tests:** | | | | | | | |
| 13.9 MPa, 20°C [hr] | 171 | 257 | 182 | | | | 85 |
| 13.9 MPa, 20°C [hr] | 120 | 210 | 213 | | | | 135 |
| 13.6 MPa, 20°C [hr] | 453 | 604 | 706 | | | | |
| 13.6 MPa, 20°C [hr] | 337 | 778 | 667 | | | | |
| 13.4 MPa, 20°C [hr] | 668 | 2245 | 1880 | | | | |
| 13.4 MPa, 20°C [hr] | 1918 | 1509 | 1989 | | | | |
| 12.9 MPa, 20°C [hr] | 2058 | 2234 | 2001 | | | | 798 |
| 12.9 MPa, 20°C [hr] | 1862 | >2332 | >2332 | | | | 901 |
| 12.0 MPa, 20°C [hr] | | | | | | 558.5 | |
| 12.0 MPa, 20°C [hr] | | | | | | 618.7 | |
| 12.0 MPa, 20°C [hr] | | | | | | 1139.1 | |

## Claims

1. A polyethylene composition comprising
a base resin having a density of from 950.0 kg/m$^3$ to 962.0 kg/m$^3$, determined according to ISO 1183, wherein the polyethylene composition has a melt flow rate $MFR_{21}$ (190°C, 21.16 kg), of from 1.0 to 9.0 g/10 min, determined according to ISO 1133 and a viscosity at a constant shear stress of 747 Pa $eta_{747}$ of from 3500 kPa·s to 20000 kPa·s.

2. The polyethylene composition according to claim 1, wherein the base resin comprises an ethylene copolymer having ethylene monomer units and comonomer units selected from at least one alpha-olefin comonomer having from 4 to 12 carbon atoms.

3. The polyethylene composition according to claims 1 or 2, wherein the polyethylene composition has a content of comonomer units selected from at least one alpha-olefin comonomer having from 4 to 12 carbon atoms, of from 0.01 to 0.50 mol%, based on the total molar amount of monomer units in the polyethylene composition.

4. The polyethylene composition according to any one of the preceding claims having a complex viscosity at a frequency of 0.05 rad/s $eta_{0.05}$ of from 600 kPa·s to 2000 kPa·s, determined according to ISO 6721-1 and ISO 6721-10.

5. The polyethylene composition according to any one of the preceding claims having a weight average molecular weight Mw of from 300 kg/mol to 750 kg/mol, determined by GPC and/or a molecular weight distribution Mw/Mn of from 25 to 100.

6. The polyethylene composition according to any one of the preceding claims having a z average molecular weight Mz of from 1800 kg/mol to 3000 kg/mol, determined by GPC.

**7.** The polyethylene composition according to any one of the preceding claims having a polydispersity index PI of from 2.0 $Pa^{-1}$ to 7.5 $Pa^{-1}$, determined according to ISO 6721-1 and ISO 6721-10.

**8.** A polyethylene composition obtainable by a multistage process, the multistage process comprising the following steps:

a) polymerizing ethylene in the presence of a solid Ziegler-Natta catalyst component in a first reactor for obtaining a first intermediate material, the first intermediate material having a melt flow rate $MFR_2$ (190°C, 2.16 kg) of 5.0 to 300 g/10min,
b) transferring the first intermediate material to a second reactor

(i) feeding ethylene to the second reactor
(ii) further polymerizing the first intermediate material

for obtaining a second intermediate material, the second intermediate material having a melt flow rate $MFR_2$ (190°C, 2.16 kg) of 80 to 300 g/10min; and
c) transferring the second intermediate material to a third reactor

(i) feeding ethylene and comonomer selected from alpha-olefins having from 4 to 12 carbon atoms to the fourth reactor
(ii) further polymerizing the second intermediate material in the presence of a silane type external donor

for obtaining a base resin having density of from 950.0 kg/$m^3$ to 962.0 kg/$m^3$, determined according to ISO 1183, and
d) extruding the base resin into a polyethylene composition having a melt flow rate $MFR_{21}$ (190°C, 21.16 kg), of from 1.0 to 9.0 g/10 min, determined according to ISO 1133, and a viscosity at a constant shear stress of 747 Pa $eta_{747}$ of from 3500 kPa·s to 20000 kPa·s.

**9.** A process for producing the polyethylene composition according to any one of the preceding claims, wherein the base resin is polymerized in a multistage process in at least three sequential reactor stages in any order in the presence of a solid Ziegler-Natta catalyst component.

**10.** The process according to claim 9, wherein the multistage process comprises the following steps:

a) polymerizing ethylene in the presence of a solid Ziegler-Natta catalyst component in a first reactor for obtaining a first intermediate material, the first intermediate material having a melt flow rate $MFR_2$ (190°C, 2.16 kg) of 5.0 to 300 g/10min,
b) transferring the first intermediate material to a second reactor

(i) feeding ethylene to the second reactor
(ii) further polymerizing the first intermediate material

for obtaining a second intermediate material, the second intermediate material having a melt flow rate $MFR_2$ (190°C, 2.16 kg) of 80 to 300 g/10min; and
c) transferring the second intermediate material to a third reactor

(i) feeding ethylene and comonomer selected from alpha-olefins having from 4 to 12 carbon atoms to the fourth reactor
(ii) further polymerizing the second intermediate material in the presence of a silane type external donor

for obtaining a base resin having density of from 950.0 kg/$m^3$ to 962.0 kg/$m^3$, determined according to ISO 1183, and
e) extruding the base resin into the polyethylene composition.

**11.** The process according to claim 10, wherein the polymerization step a) is preceded by an additional polymerization step p),

p) polymerizing ethylene and optionally comonomer selected from alpha olefins having from 4 to 12 carbon

atoms in the presence of the solid Ziegler-Natta catalyst component in a pre-first reactor for obtaining a pre-first intermediate material and transferring said pre-first intermediate material to the first reactor.

**12.** An article comprising the polyethylene composition according to any one of the preceding claims.

**13.** The article according to claim 12 being a pipe or pipe fitting.

**14.** The article according to claims 12 or 13 being a pipe which has a pressure resistance of at least 75 h, determined according to ISO 1167-1:2006 at a hoop stress of 13.9 MPa at a temperature of 20 °C, and/or a pressure resistance of at least 1000 h, determined according to ISO 1167-1:2006 at a hoop stress of 12.9 MPa at a temperature of 20 °C.

**15.** The use of a polyethylene composition according to any one of claims 1 to 11 for producing an article.

Europäisches Patentamt
European Patent Office
Office européen des brevets

# EUROPEAN SEARCH REPORT

Application Number
EP 18 20 3687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 743 305 A1 (BOREALIS AG [AT]) 18 June 2014 (2014-06-18) * paragraph [0001] * * example 3 * ----- | 1-3,7,8, 12-15 | INV. F16L9/12 |
| X | EP 2 966 123 A1 (BOREALIS AG [AT]) 13 January 2016 (2016-01-13) * IE1, IE3; pages 17,18; table 2 * ----- | 1,2,8, 12,13,15 | |
| X | EP 2 860 204 A1 (BOREALIS AG [AT]) 15 April 2015 (2015-04-15) * the whole document * ----- | 9-11 | |
| | | | TECHNICAL FIELDS SEARCHED (IPC) |
| | | | F16L |

The present search report has been drawn up for all claims

1

| Place of search | Date of completion of the search | Examiner |
|---|---|---|
| Munich | 26 April 2019 | Thomas, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 18 20 3687

This annex lists the patent family members relating to the patent documents cited in the above-mentioned European search report. The members are as contained in the European Patent Office EDP file on
The European Patent Office is in no way liable for these particulars which are merely given for the purpose of information.

26-04-2019

| Patent document cited in search report | | Publication date | Patent family member(s) | | | Publication date |
|---|---|---|---|---|---|---|
| EP 2743305 | A1 | 18-06-2014 | AU | 2013360863 | A1 | 09-07-2015 |
| | | | CN | 104854187 | A | 19-08-2015 |
| | | | EP | 2743305 | A1 | 18-06-2014 |
| | | | JP | 2016502046 | A | 21-01-2016 |
| | | | KR | 20150102040 | A | 04-09-2015 |
| | | | WO | 2014095917 | A1 | 26-06-2014 |
| EP 2966123 | A1 | 13-01-2016 | CN | 105849177 | A | 10-08-2016 |
| | | | EP | 2966123 | A1 | 13-01-2016 |
| | | | US | 2017152376 | A1 | 01-06-2017 |
| | | | WO | 2016005044 | A1 | 14-01-2016 |
| EP 2860204 | A1 | 15-04-2015 | AU | 2014334200 | A1 | 21-01-2016 |
| | | | CN | 105899546 | A | 24-08-2016 |
| | | | EP | 2860204 | A1 | 15-04-2015 |
| | | | JP | 2016531985 | A | 13-10-2016 |
| | | | KR | 20160016911 | A | 15-02-2016 |
| | | | WO | 2015051879 | A1 | 16-04-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1987097 A
- EP 1781712 A
- EP 1922342 A
- EP 1146079 A
- EP 2860204 A1
- EP 2860201 A1
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- EP 2610271 A
- WO 2012007430 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- WO 2005118655 A
- EP 810235 A
- WO 2014096296 A
- WO 2016097193 A
- EP 688794 A
- WO 9951646 A
- WO 0155230 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087261 A
- US 4578879 A
- EP 600414 A
- EP 721798 A
- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 2006063771 A
- EP 428054 A
- WO 2016124676 A1
- WO 0022040 A

**Non-patent literature cited in the description**


- **HUNG ; BROWN.** *Polymer,* 1992, vol. 33, 2989-2997
- **GELDART ; BAYENS.** The Design of Distributors for Gas-fluidised Beds. *Powder Technology,* 1985, vol. 42
- **GELDART.** Gas Fluidisation Technology. J. Wiley & Sons, 1996
- **SCHEIRS ; BÖHM ; BOOT ; LEEVERS.** PE100 Resins for Pipe Applications. *TRIP,* 1996, vol. 4 (12), 408-415
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Reson.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **J. RANDALL.** *Macromol. Sci., Rev. Macromol. Chem. Phys.,* 1989, vol. C29, 201
- **HEINO, E.L. ; LEHTINEN, A. ; TANNER J. ; SEPPÄLÄ, J. ; NESTE OY.** Rheological characterization of polyethylene fractions. *Theor. Appl. Rheol., Proc. Int. Congr. Rheol,* 1992, vol. 1, 360-362
- **HEINO, E.L. ; BOREALIS POLYMERS OY.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754
- **BAUMGÄRTEL M ; WINTER HH.** Determination of the discrete relaxation and retardation time spectra from dynamic mechanical data. *Rheol Acta,* 1989, vol. 28, 511519
- **JOHN DEALY ; RONALD G. LARSON ; HANSER.** *Structure and Rheology of Molten Polymers,* 2006, 119